# EUROPÄISCHE PATENTSCHRIFT

(11) **EP 2 337 806 B1**
(45) Veröffentlichungstag und Bekanntmachung des Hinweises auf die Patenterteilung: **27.03.2013**
(21) Anmeldenummer: 09783835.3
(22) Anmeldetag: 08.10.2009
(51) Int. Cl.: C08G 18/38, C01B 33/145, C01B 33/146, C08K 9/06, C09C 1/30

(54) **VERFAHREN ZUR HERSTELLUNG VON SILICA-HALTIGEN POLYOL-DISPERSIONEN**
METHOD FOR PRODUCING POLYOL DISPERSIONS CONTAINING SILICA
PROCÉDÉ POUR PRODUIRE DES DISPERSIONS DE POLYOLS CONTENANT DE LA SILICE

(30) Priorität: 15.10.2008 EP 08166633
(43) Veröffentlichungstag der Anmeldung: 29.06.2011
(73) Patentinhaber: BASF SE, 67056 Ludwigshafen (DE)
(72) Erfinder: ELING, Berend, 49448 Lemförde (DE); TOMOVIC, Zeljko, 49448 Lemförde (DE); AUFFARTH, Stefan, 49492 Westerkappeln (DE); TRAUT, Alexander, 68169 Mannheim (DE)
(86) Internationale Anmeldenummer: PCT/EP2009/063065
(87) Internationale Veröffentlichungsnummer: WO 2010/043530

(56) Entgegenhaltungen:
- EP-A- 1 236 765
- WO-A-2006/128793
- DE-A1- 10 338 164

## Beschreibung

Die Erfindung betrifft ein Verfahren zur Herstellung von Silica-haltigen Polyol-Dispersionen und deren Verwendung zur Herstellung von Polyurethanwerkstoffen.

Es ist bekannt, dass durch die Gegenwart von Nanopartikeln in den Komponenten von Polyurethanwerkstoffen (Isocyanat- oder Polyolkomponente) die mechanischen Eigenschaften der Polyurethanwerkstoffe gezielt beeinflusst werden können.

So ist aus DE-A 103 38 164 ein Verfahren zur Herstellung eines Polyurethanschaumes umfassend die Umsetzung eines Polyisocyanats und eines Polyols in Gegenwart von einem Treibmittel und von Kieselgelteilchen bekannt, wobei die Kieselgelteilchen mit Aminopropyltriethoxysilan funktionalisiert sind. Durch das Silanisierungsreagenz wird eine Hydrophilierung der Teilchenoberfläche der Kieselgelteilchen bewirkt, wobei diese hydrophile Oberfläche gegenüber Isocyanat reaktive Oberfilächengruppen aufweist. Dadurch werden die Teilchen während der Polymerisationsreaktion zum Polyurethanschaum kovalent in die Polymermatrix des Schaums eingebaut und wirken als Verstärkungsmittel. Dadurch kann die Offenzelligkeit des Polyurethanschaums reguliert werden, was zu einer Verbesserung der akustischen Eigenschaften (Schalldämpfung) und der Wärmeisolierfähigkeit des Polyurethanschaums führen kann. Die Oberflächenfunktionalisierten SiO₂-Partikel werden in die Polyolkomponente eingearbeitet. Die SiO₂-Partikel werden vorzugsweise ausgehend von Tetraethoxysilan in einem organischen Lösungsmittel hergestellt. Diese Syntheseroute ist kostenintensiv, da ein teurer Precursor eingesetzt wird, und außerdem die Teilchenausbeute der Synthese niedrig ist. Weiterhin liefert diese Synthese Teilchen mit einer Größe von 100 nm oder größer, welche als herkömmliche Füllstoffe anzusehen sind.

EP-A 1 366 112 offenbart ein Verfahren zur Herstellung einer Siliciumdioxid-Dispersion durch a) Vorlegen einer wässrigen Silikatlösung, b) Polykondensation des Silikats bis zu einer Teilchengröße von 3 bis 50 nm, c) Einstellen des erhaltenen Kieselsäuresols auf einen alkalischen pH-Wert, d) optional Einengen des Sols, e) Vermischen des Sols mit Bestandteilen der äußeren, fließfähigen Phase der Dispersion, und f) optional Entfernen von Wasser und/oder anderen Lösungsmittelbestandteilen aus der Dispersion. Als äußere fließfähige Phase werden Polyole, Polyamine, lineare oder verzweigte Polyglykolether, Polyester und Polylactone genannt. In den Beispielen wird ein Kieselsäuresol, dessen pH-Wert auf 10,5 bis 11 eingestellt wurde, mit Isopropanol vermischt und durch atmosphärische Destillation das Wasser bis auf einen Gehalt von < 0,1 % entfernt. Danach wurden verschiedene Polyether unter Rühren zugegeben. Anschließend wurden die flüchtigen Bestandteile destillativ bei 50 °C und im Vakuum entfernt. Erwähnt wird die Verwendung der Siliciumdioxid-Dispersionen zur Herstellung geschlossenzelliger oder offenzelliger Schaumstoffe auf Basis von Polyurethanen, Polysiloxanen, Polyolefinen oder Polystyrol. Die Sole weisen einen pH-Wert von 10 bis 12 auf und sind daher schwierig zu handhaben. Die Sole weisen nur eine geringe Konzentration an Siliciumdioxid-Partikeln (bis zu 15 Teile SiO₂-Partikel pro 100 Teile Sol) auf. Relativ große Mengen an Lösungsmittel sind erforderlich, was die Herstellung der Siliciumdioxid-Dispersionen verteuert.

EP-A 0 699 626 offenbart ein Verfahren zur Herstellung eines stabilen Siliciumdioxid-Propanol-Sols durch Ersetzen des wässrigen Mediums eines sauren wässrigen Siliciumdioxid-Sols durch Propanol, indem Propanol zu dem Siliciumdioxid-Sol zugefügt und das Sol destilliert wird, wobei auch noch Methanol zugegeben wird. Die Gegenwart von Polyol wird nicht erwähnt. Die Sole werden als Komponente in Beschichtungszusammensetzungen zur Herstellung harter und dünner Filme auf Linsen, Flaschen und Filmen aus synthetischen Harzen verwendet, wobei das kolloidale Siliciumdioxid als Mikrofüllstoff in dem gebildeten harten und dünnen Film fungiert.

WO 01/05883 offenbart ein Verfahren zur Herstellung von Polyurethanelastomeren mit nanoskaligen Füllstoffen. Es handelt sich ausschließlich um Polyester-basierte Elastomeren. Als Ausgangsmaterial für die Herstellung von solchen Elastomeren wird Siliciumdioxid mit einem pH-Wert von 8-9 in Isopropanol verwendet.

WO 2004/035473 offenbart ein Verfahren zur Herstellung von silanisierten kolloiden Siliciumdioxid-Dispersionen und deren Verwendung in Beschichtungszusammensetzungen oder als Additiv für Zementmaterialien. Dazu wird ein wässriges Silikasol vorzugsweise mit einem mit Wasser verdünnten Silan, insbesondere einem Epoxysilan, bei einem pH-Wert von vorzugsweise 6 bis 12 gemischt.

WO 2006/128793 betrifft ein Verfahren zur Herstellung von pulverförmigen kolloidalen Partikeln aus amorphem Siliciumdioxid. Dabei wird ein alkalisch stabilisiertes Silikasol mit einer Partikelgröße im Bereich von 8 bis 250 nm mit Wasser und/oder einem wasserlöslichen organischen Lösungsmittel verdünnt, ein Silan und/oder ein Polyol oder eine Dicarbonsäure hinzugegeben, das Sol mit einem Anionenaustauscher oder Kationenaustauscherharz entionisiert, das silylierte entionisierte Sol im Vakuum getrocknet und das getrocknete Sol optional zu einem feinen Pulver vermahlen. Das sylilierte Siliciumdioxidpulver kann in der Polyol-Komponente oder in der Isocyanat-Komponente zur Herstellung von Polyurethanen dispergiert werden. Die Re-Dispergierung von Teilchen mit einer wesentlich niedrigeren Teilchengröße als 100 nm kann schwierig sein, da die Teilchen-Teilchen-Wechselwirkungen zu hoch sind, um agglomeratfreie Dispersionen, beispielsweise in Polyol, zu erhalten. Die Handhabung des feinen Pulvers erfordert zudem Vorkehrungen zum Arbeitsschutz.

Aufgabe der Erfindung ist es, niedrigviskose Dispersionen von Siliciumdioxid-Partikeln mit einem Durchmesser der Partikel von < 150 nm in Polyolen bereitzustellen. Das Verfahren zur Herstellung der Silica-haltigen Polyol-Dispersionen soll dabei ausgehend von kommerziell erhältlichen wasserbasierten Silica-Solen durchgeführt werden können.

Die Aufgabe wird gelöst durch ein Verfahren zur Herstellung von Silica-haltigen Polyol-Dispersionen, umfassend die Schritte
(i) Versetzen eines wässrigen Kieselsols (K) mit einem mittleren Partikeldurchmesser von 1 bis 150 nm mit einem Gehalt an Silica, berechnet als SiO₂, von 1 bis 60 Gew.-% mit einem pH-Wert von 1 bis 6 mit der 0,5 bis 5-fachen Menge (bezogen auf die Wassermenge) an mindestens einem organischen Lösungsmittel (L), ausgewählt aus der Gruppe bestehend aus Methanol, Ethanol, 1-Propanol, 2-Propanol, 1-Butanol, 2-Butanol, 2-Methyl-2-propanol , 1-Chlor-2-Propanol, Cyclopentanol, Cyclohexanol, 1,4-Dioxan, Tetrahydrofuran, 1-Methoxy-2-propanol, 1-Ethoxy-2-propanol, 2-Ethoxyethanol, 2-Methyl-2-propanol, 2-Methoxyethanol, Dimethylformamid, Acetonitril, Dimethylsulfoxid, Aceton, Methylethylketon und Ethylacetat,
   sowie
(ii) Versetzen des so erhaltenen Gemisches mit mindestens einem Polyol,
(iii) zumindest teilweises Abdestillieren des Wassers und organischen Lösungsmittels (L),
(iv) Versetzen mit mindestens einer Verbindung (S), die mindestens eine mindestens einfach alkoxylierte Silylgruppe und mindestens einen Alkyl-, Cycloalkyl- oder Aryl-Substituenten, der Heteroatome enthalten kann, aufweist, wobei dieser Substituent gegebenenfalls Gruppen aufweist, die reaktiv gegenüber einem Alkohol, einem Amin oder einem Isocyanat sind, in einer Menge von 0,1 bis 30 mol-% bezogen auf den SiO₂-Gehalt,
(v) optional Einstellen des pH-Wertes der erhaltenen Silica-haltigen Polyol-Dispersionen auf einen Wert von 7 bis 12 durch Zugabe einer stark basischen Verbindung, wobei der Schritt (v) auch zwischen den Schritten (iii) und (iv) durchgeführt werden kann.

Durch Einstellen des pH-Wertes des wässrigen Kieselsols (K) auf einen Wert von 1 bis 6, bevorzugt 2 bis 6, werden die Löslichkeitseigenschaften des wässrigen Kieselsols verändert. Bei niedrigem pH-Wert können Alkohole als organische Lösungsmittel (L) verwendet werden, welche mit Wasser ein Azeotrop bilden können. Bevorzugte Alkohole (L) sind 2-Propanol, 1-Propanol, 1-Methoxy-2-propanol, 2-Butanol oder deren Gemische.

Nach Zugabe des Lösungsmittels (L) und des Polyols werden Lösungsmittel und Wasser, vorzugsweise bei einer Temperatur von 30 bis 140 °C, insbesondere 60 bis 120 °C, und im Vakuum bei einem Druck von vorzugsweise < 100 hPa abdestilliert.

Die eingesetzten wässrigen kolloidalen Lösungen (K) von Polykieselsäureteilchen (Kieselsol) enthalten Teilchen mit einem mittleren Partikeldurchmesser von 1 bis 150 nm, bevorzugt 2 bis 120, besonders bevorzugt 3 bis 100, ganz besonders bevorzugt 4 bis 80, insbesondere 5 bis 50 und speziell 8 bis 40 nm.

Der Gehalt an Kieselsäure, berechnet als SiO₂, beträgt von 1 bis 60 Gew.-%, bevorzugt von 10 bis 60 Gew.-%, besonders bevorzugt 10 bis 40 Gew.-%. Es sind auch Kieselsole mit einem geringeren Gehalt einsetzbar, jedoch muss der Mehrgehalt an Wasser dann in einem späteren Schritt destillativ abgetrennt werden.

Bei den wässrigen Lösungen (K) handelt es sich um kolloidale Lösungen von Polykieselsäure, die gegebenenfalls zu einem geringen Teil mit Alkalimetall-, Erdalkalimetall-, Ammonium-, Aluminium-, Eisen(II)-, Eisen(III)- und/oder Zirkoniumionen stabilisiert sein können, bevorzugt Alkalimetall-, Erdalkalimetall-, Ammonium- und/oder Eisen (III)ionen, besonders bevorzugt Alkalimetall-, Erdalkalimetall- und/oder Ammoniumionen, ganz besonders bevorzugt Alkalimetall- und/oder Erdalkalimetallionen und insbesondere Alkalimetallionen.

Unter den Alkalimetallionen sind Natrium- und/oder Kaliumionen bevorzugt, besonders bevorzugt sind Natriumionen.

Unter den Erdalkalimetallionen sind Magnesium-, Calcium- und/oder Berylliumionen bevorzugt, besonders bevorzugt sind Magnesium- und/oder Calciumionen, ganz besonders bevorzugt sind Magnesiumionen.

Das molare Verhältnis von Metallionen zu Siliciumatomen in (K) beträgt von 0:1 bis 0,1:1, bevorzugt von 0,002 bis 0,04 : 1.

Das eingesetzte Kieselsol (K) weist nach Einstellen des pH-Wertes einen pH-Wert der wässrigen Phase von 1 bis 6, bevorzugt von 2 bis 6, besonders bevorzugt 2 bis 4 auf. Unter einer wässrigen kolloidalen Lösung wird in dieser Schrift eine Lösung von gegebenenfalls stabilisierten Kieselsäurepartikeln mit einem mittleren Teilchendurchmesser zwischen 1 und 150 nm verstanden, die sich auch bei Lagern über einen Zeitraum von einem Monat bei 20 °C nicht absetzen.

Unter einem Sol wird in dieser Schrift eine kolloiddisperse, inkohärente (d.h. jedes Teilchen ist frei beweglich) Lösung eines festen Stoffes in Wasser verstanden, hier als Kieselsol eine kolloiddisperse Lösung von Siliciumdioxid in Wasser.

Die erfindungsgemäß eingesetzten sauren wässrigen Kieselsole (K) können beispielsweise auf drei verschiedenen Arten erhalten werden:
- durch Ansäuern der korrespondierenden alkalischen Kieselsole,
- durch Herstellung aus niedermolekularen Kieselsäuren, bevorzugt Wasserglas, d.h. salzartigen Teilchen mit einem Durchmesser unter 1 nm, oder
- durch Kondensation von Estern niedermolekularer Kieselsäuren.

Die wässrigen Lösungen von alkalischen Kieselsolen weisen in der Regel einen pH-Wert von 8 bis 12, bevorzugt von 8 bis 11 auf. Diese alkalischen Kieselsole sind kommerziell erhältlich und stellen mithin ein leicht verfügbares und bevorzugtes Ausgangsprodukt für das erfindungsgemäße Verfahren dar.

Die Teilchen in diesen alkalischen Kieselsolen weisen zumeist einen mittleren Partikeldurchmesser von 1 bis 150 nm, bevorzugt 2 bis 120, besonders bevorzugt 3 bis 100, ganz besonders bevorzugt 4 bis 80, insbesondere 5 bis 50 und speziell 8 bis 40 nm auf.

Der Gehalt an Kieselsäure, berechnet als SiO₂, beträgt von 1 bis 60 Gew.-% , bevorzugt von 10 bis 60, besonders bevorzugt 10 bis 40 Gew.-%. Es sind auch alkalische Kieselsole mit einem geringeren Feststoffgehalt einsetzbar, jedoch muss der Mehrgehalt an Wasser dann in einem späteren Schritt destillativ abgetrennt werden.

Die alkalischen Kieselsole können mit den oben genannten Metallionen stabilisiert sein.

Das molare Verhältnis von Metallionen zu Siliciumatomen in (K) beträgt von 0:1 bis 0,1:1, bevorzugt von 0,002 bis 0,04 : 1.

Der pH-Wert dieser alkalischen Kieselsole beträgt in der Regel mindestens 8, bevorzugt 8 bis 12, besonders bevorzugt 8 bis 11 und ganz besonders bevorzugt 8 bis 10.

Die Herstellung der erfindungsgemäß einzusetzenden Kieselsole (K) aus diesen alkalischen Kieselsolen erfolgt durch Einstellen des gewünschten pH-Wertes in diesen Kieselsolen, beispielsweise Zugabe von Mineralsäuren oder Versetzen der alkalischen Kieselsole mit einem Ionentauscher.

Das Ansäuern kann mit beliebigen Säuren erfolgen, bevorzugt mit Salzsäure, Salpetersäure, Phosphorsäure, Schwefelsäure, Essigsäure, Ameisensäure, Methylsulfonsäure, para-Toluolsulfonsäure oder auch durch Versetzen mit einem sauren Ionentauscher, bevorzugt durch Ansäuern mit Salzsäure, Salpetersäure, Phosphorsäure, Schwefelsäure oder Essigsäure, besonders bevorzugt mit Salzsäure, Salpetersäure oder Schwefelsäure und ganz besonders bevorzugt durch Ansäuern mit Schwefelsäure.

Es stellt eine bevorzugte Ausführungsform dar, die Kieselsole (K) durch Versetzen von alkalischen Kieselsolen mit einem Ionentauscher herzustellen. Dies hat zur Folge, dass in den Kieselsolen (K) der Elektrolytgehalt niedrig ist, beispielsweise weniger als 0,2 Gew.-% beträgt und bevorzugt weniger als 0,1 Gew.-%.

Unter Elektrolyten werden hier andere anorganische ionische Bestandteile als Silikate, Hydroxide und Protonen verstanden. Diese vorwiegend aus der Stabilisierung der alkalischen Kieselsole stammenden Elektrolyte werden zur Stabilisierung der Partikel nach deren Herstellung zu der Suspension zugegeben.

Denkbar ist auch die Herstellung der Kieselsole (K) aus Wasserglas durch Ansäuern, beispielsweise mit einem Ionentauscher oder durch Versetzen mit Mineralsäure. Als Wasserglas wird dafür bevorzugt Kalium- und/oder Natriumsilikat eingesetzt, das besonders bevorzugt ein Verhältnis von 1 bis 10 mol SiO₂ zu 1 mol Alkalioxid, ganz besonders bevorzugt 1,5 bis 6 und insbesondere 2 bis 4 mol SiO₂ zu 1 mol Alkalioxid aufweist.

In diesem Fall lässt man das Reaktionsgemisch reagieren, bis sich ein Kieselsol (K) der gewünschten Größe gebildet hat, und fährt dann mit dem erfindungsgemäßen Verfahren fort.

Die niedermolekularen Kieselsäuren (Ortho- und Oligokieselsäure) sind normalerweise nur in hochverdünnten wässrigen Lösungen mit einem Gehalt von wenigen Gew.-% stabil und werden dafür in der Regel vor Weiterverwendung aufkonzentriert.

Weiterhin kann die Herstellung der Kieselsole (K) durch Kondensation von Estern niedermolekularer Kieselsäuren erfolgen. Dabei handelt es sich meist um C₁- bis C₄-Al kyl-, besonders Ethylester von Oligo- und insbesondere Orthokieselsäure, die im Sauren oder Basischen Kieselsole (K) bilden.

In dem Schritt (i) wird das wässrige saure Kieselsol mit der 0,5 bis 5-fachen Menge (bezogen auf die Menge Wasser des eingesetzten Kieselsols) an mindestens einem organischen Lösungsmittel (L) versetzt. Optional wird vorher oder gleichzeitig mit Wasser verdünnt.

Das organische Lösungsmittel (L) wird nach folgenden Kriterien ausgewählt: Es sollte unter den Vermischungsbedingungen sowohl eine ausreichende Mischbarkeit mit Wasser als auch eine Mischbarkeit mit dem Polyol aufweisen.

Die Mischbarkeit mit Wasser unter den Reaktionsbedingungen sollte mindestens 5 Gew.-% (bezogen auf das fertige Wasser-Lösungsmittel Gemisch), bevorzugt mindestens 25 Gew.-% und besonders bevorzugt mindestens 70 Gew.-% betragen, insbesondere sollte das Lösemittel in allen Mischungsverhältnissen mit Wasser eine homogene Lösung bilden, denn bei zu geringer Mischbarkeit besteht die Gefahr, dass sich aus dem modifizierten Kieselsol ein Gel bildet oder größere Nanopartikelaggregate ausflocken.

Das Polyol sollte vollständig in dem Lösungsmittel (L) bzw. dem Wasser-Lösungsmittel-Gemisch löslich sein.

Zudem ist es bevorzugt, wenn die Lösungsmittel (L) mindestens 2 g/l der gebildeten Silikate sedimentationsfrei zu suspendieren vermögen.

Weiterhin sollte das Lösungsmittel (L) einen Siedepunkt von weniger als 150 °C in einem Druckbereich von Normaldruck bis 5 hPa aufweisen, so dass es einfach destillativ abtrennbar ist.

Das Lösungsmittel (L) dient als Schleppmittel zur Wasserentfernung. In einer bevorzugten Ausführungsform bildet das Lösungsmittel (L) mit Wasser unter den Bedingungen der Destillation ein Azeotrop oder Heteroazeotrop, so dass das Destillat nach der Destillation eine wässrige und eine organische Phase bildet.

Beispiele für geeignete Lösungsmittel (L) sind Methanol, Ethanol, 1-Propanol, 2-Propanol, 1-Butanol, 2-Butanol, 2-Methyl-2-propanol , 1-Chlor-2-Propanol, Cyclopentanol, Cyclohexanol, 1,4-Dioxan, Tetrahydrofuran, 1-Methoxy-2-propanol, 1-Ethoxy-2-propanol, 2-Ethoxyethanol, 2-Methyl-2-propanol, 2-Methoxyethanol, Dimethylformamid, Acetonitril, Dimethylsulfoxid und Aceton. Weitere Beispiele sind Methylethylketon und Ethylacetat.

In Schritt (ii) wird in diese Lösung das Polyol eingetragen. Bevorzugte Polyole sind Polyetherole (b1). Geeignete Polyetherole (b1) weisen vorzugsweise ein Molekulargewicht von größer 96 g/mol auf. Weiterhin bevorzugt ist Polytetrahydrofuran (b3) mit einem Molgewicht von 550 bis 4000 g/mol.

Polyetherole (b1) werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das meist 2 bis 10 reaktive Wasserstoffatome gebunden enthält, oder durch kationische Polymerisation mit LewisSäuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Auch tertiäre Amine können als Katalysator eingesetzt werden, beispielsweise Triethylamin, Tributylamine, Trimethylamin, Dimethylethanolamin oder Dimethylcyclohexylamin. Die Alkylenoxide können einzeln, alternierend nacheinander oder als Mischungen verwendet werden.

Bevorzugte Polyole basieren auf Propylenoxid und Ethylenoxid. Geeignete Polyole umfassen Blockschaum-Polyole, Formschaum-Polyole, Hartschaum-Polyole, C.A.S.E.-Polyole ("coatings, adhesives, sealants, elastomers") und Glykole wie Polypropylenglykol. Die Polyolfunktionalität kann von 2 bis 10 betragen, das Molgewicht kann von 96 bis 20 000 g/mol betragen, und der Gehalt an Polypropylenoxid beträgt im Allgemeinen von 50 bis 100 Gew.-%, vorzugsweise 50 bis 99 Gew.-%.

Die Polyole können auch zur Herstellung von Polyisocyanatprepolymeren eingesetzt werden.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin, Trimethylolpropan, Pentaerythritol, Sorbitol und Saccharose in Betracht. Weiter kommen in Betracht Polyole basierend auf aminischen Startern, wie Triethanolamine, Diethanolamine, Ethylenediamine und Toluendiamine.

Als Polyetherol kann weiterhin Polytetrahydrofuran eingesetzt werden. Dabei beträgt das zahlenmittlere Molekulargewicht des Polytetrahydrofurans üblicherweise 550 bis 4000 g/mol, bevorzugt 750 bis 3000 g/mol, besonders bevorzugt 800 bis 2500 g/mol und insbesondere etwa 2000 g/mol.

Es können auch Gemische aus Polyetherolen eingesetzt werden.

In einem Schritt (iii) wird von dieser Lösung Wasser und organisches Lösungsmittel abdestilliert. Die Abdestillation von Wasser und dem organischen Lösungsmittel (L) erfolgt unter normalem oder vermindertem Druck, bevorzugt bei 100 hPa bis normalem Druck, besonders bevorzugt bei 50 hPa bis normalem Druck, ganz besonders bevorzugt bei 20 hPa bis normalem Druck und insbesondere bei 10 hPa bis normalem Druck.

Die Temperatur, bei der die Destillation erfolgt, richtet sich nach der Siedetemperatur von Wasser und/oder organischem Lösungsmittel (L) bei dem jeweiligen Druck.

Bevorzugt werden die Destillationsbedingungen so gewählt, dass das organische Lösungsmittel unter den Bedingungen als effektives Schleppmittel für Wasser wirkt, insbesondere so, dass Wasser und das organische Lösungsmittel unter den Bedingungen ein Azeotrop bilden.

Bevorzugt beträgt die Temperatur nicht mehr als 140 °C, besonders bevorzugt nicht mehr als 120 °C.

Die Destillation kann diskontinuierlich, semikontinuierlich oder kontinuierlich erfolgen.

Beispielsweise kann sie diskontinuierlich aus einem Rührkessel erfolgen, dem gegebenenfalls eine kurze Rektifikationskolonne aufgesetzt sein kann.

Die Wärmezufuhr bei dem Rührkessel erfolgt über innen- und/oder außenliegende Wärmetauscher herkömmlicher Bauart und/oder Doppelwandheizung, vorzugsweise außenliegende Umlaufverdampfer mit Natur- oder Zwangsumlauf. Die Durchmischung des Reaktionsgemisches erfolgt auf bekannte Weise, z. B. durch Rühren, Umpumpen oder Naturumlauf.

Kontinuierlich erfolgt die Destillation bevorzugt durch Überleiten der Destillationsvorlage über einen Fallfilmverdampfer oder einen Wärmetauscher.

Als Destillationsapparat dafür geeignet sind sämtliche dem Fachmann bekannte Destillationsapparate, z.B. Umlaufverdampfer, Dünnfilmverdampfer, Fallfilmverdampfer, Wischblattverdampfer, gegebenenfalls jeweils mit aufgesetzten Rektifikationskolonnen sowie Strippkolonnen. Als Wärmetauscher geeignet sind beispielsweise Robert-Verdampfer oder Röhren- oder Plattenwärmetauscher.

Wasser und Lösungsmittel (L) werden in der Regel weitestgehend abdestilliert. Der Gehalt an Silica in dem Polyol beträgt von 5 bis 60 Gew.-%, bevorzugt von 5 bis 50 und besonders bevorzugt von 10 bis 40 Gew.-%.

Der Restgehalt an Wasser im fertigen Produkt sollte weniger als 5 Gew.-% betragen, bevorzugt weniger als 3, besonders bevorzugt weniger als 2, ganz besonders bevorzugt weniger als 1, insbesondere weniger als 0,5 und speziell weniger als 0,3 Gew.-% betragen.

Der Restgehalt an Lösungsmittel (L) im fertigen Produkt sollte weniger als 5 Gew.-% betragen, bevorzugt weniger als 1, besonders bevorzugt weniger als 0,5 und ganz besonders bevorzugt weniger als 0,2 Gew.-% betragen.

Die Entfernung des Wassers kann anstelle der Destillation auch erfolgen durch Absorption, Pervaporation oder Diffusion über Membranen.

Erfindungsgemäß werden die Kieselsäurepartikel im Schritt (iv) durch Zugabe eines Silans (S) oberflächenmodifiziert. Das Silan (S) weist mindestens eine, bevorzugt genau eine mindestens einfach, beispielsweise ein- bis dreifach, bevorzugt zwei- bis dreifach, besonders bevorzugt genau dreifach alkoxylierte Silylgruppe auf. Zudem weist das Silan mindestens einen Alkyl-, Aryl- oder Cycloalkyl-Substituenten auf, wobei dieser Substituent gegebenenfalls Heteroatome aufweist, die nicht reaktiv oder reaktiv gegenüber einem Alkohol, einem Amin oder einem Isocyanat sein können.

Unter alkoxylierten Silylgruppen werden Gruppen

(R¹-O-)ₙ-Si-

verstanden, in denen
R¹ für C₁ bis C₂₀-Alkyl, bevorzugt C₁bis C₄-Alkyl und
n für eine ganze Zahl von 1 bis 3, bevorzugt 2 bis 3 und besonders bevorzugt für 3 steht.

Beispiele für C₁ bis C₂₀-Alkyl sind Methyl, Ethyl, *iso*-Propyl, n-Propyl, n-Butyl, *iso*-Butyl, *sek*-Butyl, *tert*-Butyl, n-Hexyl, n-Heptyl, n-Octyl, 2-Ethylhexyl, n-Decyl, n-Dodecyl, n-Tetradecyl, n-Hexadecyl, n-Octadecyl und n-Eicosyl.

Beispiele für C₁ bis C₄-Alkyl sind Methyl, Ethyl, *iso*-Propyl, n-Propyl, n-Butyl, *iso*-Butyl, *sek*-Butyl und *tert*-Butyl.

Bevorzugte Reste R¹ sind Methyl, Ethyl, n-Butyl und tert-Butyl, besonders bevorzugt Methyl und Ethyl.

Substituenten können sowohl reaktiv als auch unreaktiv gegenüber einem Alkohol, einem Amin oder einem Isocyanat sein. Die unreaktiven Sustituenten können Alkyl-, Cycloalkyl- oder Arylgruppen mit 1 bis 20 C-Atomen sein, wie C₁ bis C₂₀-Alkyl, z.B. Methyl, Ethyl, *iso*-Propyl, n-Propyl, n-Butyl, *iso*-Butyl, *sek*-Butyl, *tert*-Butyl, n-Hexyl, n-Heptyl, n-Octyl, 2-Ethylhexyl, n-Decyl, n-Dodecyl, n-Tetradecyl, n-Hexadecyl, n-Octadecyl, n-Eicosyl Cyclohexyl und Phenyl.

Bevorzugte Verbindungen (S) sind Methyltrimethoxysilan, n-Propyltriethoxysilan, Dimethyldimethoxysilan, Phenyltrimethoxysilan, n-Octyltriethoxysilan, Isobutyltriethoxysilan, n-Butyltrimethoxysilan, t-Butyltrimethoxysilan, Methyltriethoxysilan, Benzyltriethoxysilan, Trimethylmethoxysilan, Vinyltrimethoxysilan, Vinyltriethoxysilan, Allyltrimethoxysilan, Allyltriethoxysilan, Butenyltriethoxysilan, n-Decyltriethoxysilan, Di-n-butyldimethoxysilan, Diisopropyldimethoxysilan, Dimethyldiethoxysilan, Dodecylmethyldiethoxysilan, Dodecyltriethoxysilan, Ethyltrimethoxysilan, Ethyltriethoxysilan, Hexadecyltriethoxysilan, Hexadecyltrimethoxysilan, Hexyltrimethoysilan, Hexyltriethoxysilan, Isobutylmethyltriethoxysilan, Isobutyltrimethoxysilan, n-Octadecyltriethoxysilan, n-Octadecyltrimethoxysilan, n-Octadecylmethyldimethoxysilan, n-Octadecylmethyldiethoxysilan, n-Octylmethyldiethoxysilan, Octyldimethylmethoxysilan, Pentyltriethoxysilan, Phenylmethyldimethoxysilan, Phenyltriethoxysilan.

Die unreaktiven Gruppen können auch Heteroatome aufweisen, z.B. Ether- und Thioethergruppen. Eine besondere Klasse dieser Substituenten sind monofunktionelle Polyoxyalkylen-Verbindungen z.B. auf Basis von Ethylenoxid und Propylenoxid.

Bevorzugte Verbindungen (S) sind 2-[Methoxy(polyethylenoxy)propyl]-trimethoxysilan, 3-Methoxypropyltrimethoxysilan, Bromphenyltrimethoxysilan, 3-Brompropyltrimethoxysilan, 2-Chlorethylmethyldimethoxysilan, (Heptadecafluoro-1,1,2,2-tetrahydrodecyl)triethoxysilan, (Heptadecafluoro-1,1,2,2-tetrahydrodecyl)trimethoxysilan, Diethylphosphatoethyltriethoxysilan, 2-(Diphenylphosphino)ethyl-triethoxysilan, 3-(N,N-Dimethylaminopropyl)trimethoxysilan, 3-Methoxypropyltrimethoxysilan, 3-(Methacryloxy)propyltrimethoxysilan, 3-Acryloxypropyltrimethoxysilan, 3-(Methacryloxy)propyltriethoxysilan, 3-(Methacryloxy)propylmethyldimethoxysilan.

Die reaktiven Gruppen sind mit den Silylgruppen durch die Alkylen-, Cycloalkylen- oder Arylengruppen, bevorzugt Alkylengruppen, als Spacergruppen verbunden.

Beispiele dafür sind Methylen, 1,2-Ethylen (-CH₂CH₂-), 1,2-Propylen (-CH(CH₃)-CH₂-) und/oder 1,3-Propylen (-CH₂-CH₂-CH₂-), 1,2-, 1,3- und/oder 1,4-Butylen, 1,1-Dimethyl-1,2-ethylen, 1,2-Dimethyl-1,2-ethylen, 1,6-Hexylen, 1,8-Octylen oder 1,10-Decylen, bevorzugt Methylen, 1,2-Ethylen, 1,2- oder 1,3-Propylen, 1,2-, 1,3- oder 1,4-Butylen, besonders bevorzugt Methylen, 1,2-Ethylen, 1,2- und/oder 1,3-Propylen und/oder 1,4-Butylen und ganz besonders bevorzugt Methylen, 1,2-Ethylen, 1,2- und/oder 1,3-Propylen.

Bevorzugte reaktive Gruppen sind eine primäre Aminogruppe, eine Hydroxylgruppe, eine Thiolgruppe und eine Epoxygruppe.

Bevorzugte Verbindungen (S) sind 2-(3,4-Epoxycyclohexyl)ethyltriethoxysilan, 2-(3,4-Epoxycyclohexyl)ethyltrimethoxysilan, 3-Aminopropylmethyldimethoxysilan, 3-Aminopropyldimethylmethoxysilan, 3-Aminopropyldimethylethoxysilan, N-(2'-Aminoethyl)-3-aminopropylmethyldimethoxysilan, N-(2'-Aminoethyl)-3-aminopropylmethyldiethoxysilan, N-(2'-Aminoethyl)-3-aminopropylmethoxysilan, N-(2'-Aminoethyl)-3-aminopropylethoxysilan, 3-Mercaptopropyltrimethoxysilan, 3-Mercaptopropyltriethoxysilan, 4-Aminobutyltriethoxysilan, 1-Amino-2-(dimethylethoxysilyl)propan, (Aminoethylaminoethyl)phenethyltrimethoxysilan, N-(2-Aminoethyl)-3-aminopropyltriethoxysilan, p-Aminophenyltrimethoxysilan, 3-Aminopropylmethyldiethoxysilan, 3-Aminopropyltriethoxysilan, 3-Aminopropyltrimethoxysilan, 11-Aminoundecyltriethoxysilan, (3-Glycidoxypropyl)trimethoxysilan, (3-Glycidoxypropyl)triethoxysilan, N-(Hydroxyethyl)-N-Methylaminopropyltrimethoxysilan, Hydroxymethyltriethoxysilan, 3-Mercaptopropylmethyldimethoxysilan, 3-Mercaptopropylmethyldiethoxysilan, N-Methylaminopropylmethyldimethoxysilan, Bis(2-hydroxyethyl)-3-aminopropyltriethoxysilan.

Besonders bevorzugte Verbindungen (S) sind Trialkoxysilane, welche mit den nachstehenden Gruppen substituiert sind:
- CH₂-CH₂-CH₂-NH₂
- CH₂-CH₂-CH₂-SH
- CH₂-CH₂-CH₂-NH-CH₂-CH₂-CH₂-NH₂
- CH₂-CH₂-CH₂-N(CH₂-CH₂OH)₂

Die genannten Gruppen reagieren mit Isocyanatgruppen und ergeben somit eine kovalente Bindung der Silikatpartikel an die PU-Matrix. Weiterhin bevorzugt sind Trialkoxysilane, welche mit einer Glycidoxypropylgruppe -CH₂-CH₂-CH₂-O-CH₂-CH(O)CH₂ substituiert sind. Die Epoxygruppe kann mit Aminogruppen, beispielsweise von monofunktionellen Polyetheraminen oder Hydroxylgruppen aufweisenden Komponenten, beispielsweise hyperverzweigten Polyolen, reagieren.

Auch kann man Silanverbindungen einsetzen, die zwei oder mehr Silangruppen enthalten. Solche Verbindungen sind in WO 2004/035649 beschrieben. Beispiele sind Bis(3-methyldimethoxysilylpropyl)polypropylenoxid, Bis(triethoxysilyl)ethan, Bis(triethoxysilyl)octan, 1,6-Bis(trimethoxysilyl)hexan, Bis(methyldiethoxysilylpropyl)amin und Bis(triethoxysilylpropyl)amin.

Durch die Umsetzung mit der Verbindung (S) wird die Oberfläche des eingesetzten Kieselsols (K) so modifiziert, dass die Verträglichkeit zwischen dem ursprünglich polaren Kieselsol und dem Polyol verbessert wird. Durch Kombination von den verschiedenen Silanen, z.B. durch Kombination von reaktiven und unreaktiven Silanen, können bestimmte Effekte gezielt eingestellt werden. Es ist auch möglich, Gemische aus unterschiedlich modifizierten Silikateilchen einzusetzen.

Im Allgemeinen wird (S) in einer Menge von 0,1 bis 20 µmol pro m² Oberfläche von (K) eingesetzt.

Dies entspricht in der Regel einer Menge von 0,01 bis 5 mmol (S) pro Gramm (K), bevorzugt 0,05 bis 4 mmol (S) pro Gramm (K) und besonders bevorzugt 0,1 bis 3 mmol (S) pro Gramm (K).

Dazu erfolgt die Umsetzung mit (S) unter Rühren bei einer Temperatur von 10 bis 100 °C, bevorzugt von 20 bis 90, besonders bevorzugt von 30 bis 80 °C.

Unter diesen Reaktionsbedingungen lässt man 1 bis 48 Stunden, bevorzugt 2 bis 48 Stunden, besonders bevorzugt 2 bis 36 Stunden, besonders bevorzugt 4 bis 24 Stunden reagieren.

Das Silan (S) wird in Mengen von 0,1 bis 30 mol% zugesetzt bevorzugt 0,3 bis 25 und besonders bevorzugt 0,5 bis 20 mol% bezogen auf den SiO₂-Gehalt.

Das Silan (S) kann zu dem in Schritt (i) erhaltenen Gemisch aus wässrigem Kieselsol (K) und Lösungsmittel (L) zugegeben werden.

Bevorzugt wird das Silan (S) aber nach (ii) Versetzen des Gemischs mit dem Polyol und (iii) zumindest teilweisem Abdestillieren des organischen Lösungsmittels (L) zugegeben. Wird das Silan (S) erst nach dem Destillationsschritt (iii) zugegeben, wird bevorzugt ein zweiter Destillationsschritt durchgeführt, in dem gegebenenfalls mit dem Silan eingebrachtes Lösungsmittel sowie weitere flüchtige Bestandteile entfernt werden.

In einem optionalen Schritt (v) wird der pH-Wert des silikathaltigen Polyols auf einen Wert von 7 bis 12 eingestellt. Dies erfolgt durch Zugabe einer stark basischen Verbindung. Geeignete stark basische Verbindungen sind Alkalihydroxide (NaOH, KOH, Li-OH) und Alkalimetallalkoholate. Durch die Zugabe der stark basischen Verbindung kann die Reaktivität der Polyolkomponente erhöht werden. Dies wird darauf zurückgeführt, dass saure Silanolgruppen an der Oberfläche der Kieselsäurepartikel den Aminkatalysator adsorbieren können, wodurch die Reaktivität des Polyurethansystems herabgesetzt wird. Dem kann durch Zugabe einer basischen Verbindung entgegengewirkt werden.

Die Einstellung des pH-Wertes durch Zugabe einer stark basischen Verbindung kann auch vor Zugabe des Silans durchgeführt werden. In einer Ausführungsform des erfindungsgemäßen Verfahrens wird erst der pH-Wert auf einen Wert von 7 bis 12 eingestellt, gegebenenfalls mit der stark basischen Verbindung eingebrachtes Lösungsmittel zumindest teilweise abdestilliert, anschließend das Silan (S) zugegeben und flüchtige Bestandteile nach der Silanisierung abdestilliert. In einer weiteren Ausführungsform des erfindungsgemäßen Verfahrens wird erst das Silan (S) zugegeben, anschließend der pH-Wert durch Zugabe der stark basischen Verbindung auf einen Wert von 7 bis 12 eingestellt, und flüchtige Bestandteile nach der Silanisierung entfernt.

Die erfindungsgemäß hergestellten silikathaltigen Polyole können als Polyolkomponente zur Herstellung von Polyurethanen eingesetzt werden. Das Einsatzgebiet der erfindungsgemäß hergestellten silikathaltigen Polyole ist sehr breit. Beispielsweise können sie verwendet werden zur Herstellung von kompaktem Polyurethan, wie z.B. Adhesiven, Beschichtung, Bindemittel, Einkapselungsmittein, themoplatischen Polyurethanen und Elastomeren. Weiterhin können sie verwendet werden zur Herstellung von mikrozellulärem Polyurethanschaum, zum Beispiel für Schuhanwendungen, Strukturschaum, Integralschaum und RIM-Polyurethanen, beispielsweise für Stoßstangen. Ferner können sie verwendet werden zur Herstellung von Hochdichteschäumen, z.B. von Halbhartschaum und Hinterteppichschaum, Niedrigdichteschäumen, wie z.B. von Weichschaum, Hartschaum, Thermoformschaum und Verpackungsschaum.

Polyurethanwerkstoffe werden hergestellt, indem man a) organische Polyisocyanate mit b) Polyolen enthaltend die Silica-haltigen Polyole, gegebenenfalls c) Kettenverlängerungs- und/oder Vernetzungsmittel, d) Treibmittel, e) Katalysatoren und gegebenenfalls f) Hilfsmittel und Zusatzstoffe zu einer Reaktionsmischung vermischt und diese Reaktionsmischung ausreagieren lässt.

Die zur Herstellung der Polyurethanwerkstoffe verwendeten Polyisocyanate a) umfassen Verbindungen auf Basis von Methandiphenyldiisocyanat (im Folgenden als MDI bezeichnet), Toluoldiisocyanat, Isophorondiisocyanat, Naphthalindiisocyanat oder Hexamethylendiisocyanat. Unter MDI wird 2,4-MDI, 4,4'-MDI und höherkemige Homologe sowie Gemische daraus verstanden.

Das Polyisocyanat a) kann in Form von Polyisocyanatprepolymeren eingesetzt werden. Diese Polyisocyanatprepolymere sind erhältlich, indem vorstehend beschriebenes MDI, beispielsweise bei Temperaturen von 30 bis 100 °C, bevorzugt bei etwa 80 °C, mit Polyetherolen (b1) und/oder Polyesterolen (b2), zum Prepolymer umgesetzt werden. Als Polyetherole (b1) werden vorzugsweise vorstehend beschriebenen Polyetherole eingesetzt. Dabei können neben Polyisocyanatprepolymeren auf Polyetherbasis sowie Polyisocyanatprepolymeren auf Polyesterbasis auch deren Mischungen sowie Polyisocyanatprepolymere auf Basis von Polyethern und Polyestern eingesetzt werden. Der NCO-Gehalt der Prepolymere liegt dabei vorzugsweise z.B. für MDI-basierte Prepolymeren im Bereich von 2 % bis 30 %, besonders bevorzugt von 5 % bis 28% und insbesondere von 10 % bis 25 %.

Als Polyol-Komponente zur Herstellung von Prepolymeren können auch die Silica-haltigen Polyetherol-Dispersionen der Erfindung eingesetzt werden.

Gegebenenfalls werden den genannten Polyolen bei der Herstellung der Isocyanatprepolymere übliche Kettenverlängerer (**c**) zugegeben. Solche Substanzen sind im Folgenden unter d) beschrieben.

Als Polyole b) können die Polyetherole (b1) oder poly-THF (b3) eingesetzt werden, die auch in den Silica-haltigen Dispersionen eingesetzt werden. Es können aber auch andere Polyetherole (b1), Polyesterole (b2) und poly-THF (b3) eingesetzt werden. Geeignete Polyole b) werden beschrieben in The Polyurethane Book, Randall und Lee, Wiley 2002, Seiten 99-112. Geeignete Polyesterole (b2) werden beispielsweise durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren, hergestellt.

Ferner sind bei der Herstellung von Polyurethanschaumstoffen Treibmittel d) und/oder Wasser zugegen. Als Treibmittel d) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale sowie anorganische und organische Verbindungen, die beim Erhitzen Stickstoff freisetzen, oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC.

Als Kettenverlängerungsmittel c) werden Substanzen mit einem Molekulargewicht von vorzugsweise kleiner 600 g/mol, besonders bevorzugt von 56 bis 600 g/mol eingesetzt, wobei Kettenverlängerer 2 gegenüber Isocyanaten reaktive Wasserstoffatome aufweisen. Diese können einzeln oder bevorzugt in Form von Mischungen eingesetzt werden. Vorzugsweise werden Diole mit Molekulargewichten kleiner als 600, besonders bevorzugt von 60 bis 400 und insbesondere 60 bis 300 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, Pentandiol, Tripropylenglykol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, und niedermolekulare hydroxylgruppenhaltige Polyalkylenoxide auf Basis Ethylen- und/oder 1,2-Propylenoxid und den vorgenannten Diolen als Startermoleküle. Besonders bevorzugt werden als Kettenverlängerer d) Monoethylenglykol, Diethylenglykol, 2-Methyl-1,3-Propandiol, 1,4-Butandiol, 1,5-Pentandiol, 1,6-Hexandiol oder Mischungen davon eingesetzt.

Gegebenenfalls können neben Kettenverlängerungsmitteln auch Vernetzungsmittel eingesetzt werden. Dabei handelt es sich um Substanzen mit einem Molekulargewicht von kleiner 450 g/mol und 3 gegenüber Isocyanat reaktive Wasserstoffatome, beispielsweise um Triole, wie 1,2,4-, 1,3,5-Trihydroxycyclohexan, Glycerin und Trimethylolpropan oder niedermolekulare hydroxylgruppenhaltige Polyalkylenoxide auf Basis Ethylen- und/oder 1,2-Propylenoxid und den vorgenannten Triolen als Startermoleküle.

Sofern Kettenverlängerungsmittel c) Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) bis (f), zum Einsatz.

Als Katalysatoren e) zur Herstellung der Polyurethanwerkstoffe werden bevorzugt Verbindungen verwendet, welche die Reaktion des Treibmittels mit den Isocyanatgruppen aufweisenden Verbindungen a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin, Pentamethyldiethylentriamin, Tetramethyldiaminoethylether, Harnstoff, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolaminverbindungen, wie Triethanolamin, Triisopropanolamin, N-Methyl- und N-Ethyldiethanolamin und Dimethylethanolamin, N , N-Dimethylethanolamine, N,N-Dimethylcyclohexylamine, Bis(N,N-dimethylaminoethyl)ether, N,N,N',N',N"-Pentamethyldiethylenetriamine, 1,4-Diazabicyclo[2.2.2]octane, 2-(2-Dimethylaminoethoxy)ethanol, 2-((2-Dimethylaminoethoxy)ethylmethylamino)ethanol, 1-(bis(3-Dimethylamino)-propyl)amino-2-propanol, N,N',N"tris(3-dimethylaminopropyl)hexahydrotriazine, Dimorpholinodiethylether, N,N-Dimethylbenzylamin, N,N,N',N",N"-Pentamethyldipropylentriamin, N,N'-Diethylpiperazin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinnmaleat, Dibutylzinnmercaptid und Dioctylzinndiacetat, sowie Bismutcarboxylate, wie Bismut(III)-neodecanoat, Bismut-2-ethylhexanoat und Bismutoctanoat oder Mischungen davon, Phenylquecksilberpropionat, Bleioctoat, Kaliumacetat/octoate, Quarternäre Ammoniumformiate und Eisenacetylacetonat. Die organischen Metallverbindungen können allein oder vorzugsweise in Kombination mit stark basischen Aminen eingesetzt werden.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente a) bis c).

Der Reaktionsmischung zur Herstellung der Polyurethanwerkstoffe können gegebenenfalls auch noch Hilfsmittel und/oder Zusatzstoffe f) zugegeben werden. Genannt seien beispielsweise oberflächenaktive Substanzen, Schaumstabilisatoren, Zellregler, weitere Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponenten a) bis c), eingesetzt.

Die Polyurethanwerkstoffe werden nach dem one-shot- oder Prepolymer-Verfahren mit Hilfe der Niederdruck- oder Hochdrucktechnik hergestellt. Die Schäume können als Blockschaum oder als Formschaum hergestellt werden. Diese Verfahrensweisen werden beispielsweise beschrieben in ,the Polyurethanes book' Randall and Lee, Eds, Wiley, 2002.

Die Erfindung wird durch die nachstehenden Beispiele näher erläutert.

### Beispiele

### A. Transfer von nicht modifizierten Siliciumdioxid-Nanopartikeln in Polyole und Herstellung von stabilen Siliciumdioxid-Dispersionen (Referenzbeispiele)

### Beispiel A1:

Zu 900 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 450 g Isopropanol, 450 g n-Propanol und 720 g Polyol 1 hinzugegeben. Ein Gemisch aus Wasser, Iso- und n-Propanol wurde bei vermindertem Druck und schrittweise von 30 °C bis 75 °C ansteigender Temperatur über einen Zeitraum von 8 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 20 Gew.-% erhalten.

### Beispiel A2:

Zu 400 g eines kommerziell erhältlichen wässrigen Kieselsols (Levasil® 200/30% von H.C. Starck GmbH & Co KG, Leverkusen, Deutschland, Teilchendurchmesser basierend auf der BET-Methode: 15 nm, pH 9,0, Siliciumdioxid-Konzentration: 30 Gew.-%) wurden durch Zugabe von DOWEX^{®} MONOSPHERE^{®} 650C (H) Kationenaustauscherharz auf einen pH-Wert von 2,1 entionisiert. 333 g des entionisierten Kieselsols wurden mit 333 g Isopropanol und 400 g Polyol 1 gemischt. Ein Wasser- Isopropanol-Gemisch wurde bei verringertem Druck bei schrittweise von 30 °C bis 75 °C ansteigender Temperatur über einen Zeitraum von 8 Stunden entfernt, wobei die Temperatur in den letzten 1 bis 2 Stunden 75 °C betrug. Es wurde eine stabile, transparente Siliciumdioxid-Dispersion in dem Polyol mit einer Siliciumdioxid-Konzentration von 20 Gew.-% erhalten.

### Beispiel A3:

500 g eines kommerziell erhältlichen wässrigen Kieselsols (Levasil® 100/45% von H.C. Starck GmbH & Co KG, Leverkusen, Deutschland, Teilchendurchmesser basierend auf der BET-Methode: 30 nm, pH 10,0, Siliciumdioxid-Konzentration: 45 Gew.-%) wurden durch Zugabe von DOWEX^{®} MONOSPHERE^{®} 650C (H) Kationenaustauscherharz auf einen pH-Wert von 2,1 entionisiert. 444,4 g des entionisierten Kieselsols wurden mit 222 g Isopropanol, 222 g n-Propanol und 800 g Polyol 1 gemischt. Ein Gemisch aus Wasser, Iso- und n-Propanol wurde unter verringertem Druck bei schrittweise von 30 °C bis 75 °C ansteigender Temperatur über einen Zeitraum von 8 Stunden entfernt, wobei die Temperatur in den letzten 1 bis 2 Stunden 75 °C betrug. Es wurde eine stabile, transparente Siliciumdioxid-Dispersion in dem Polyol mit einer Siliciumdioxid-Konzentration von 20 Gew.-% erhalten.

### Beispiel A4:

700 g eines kommerziell erhältlichen wässrigen Kieselsols (Levasil® 300/30% von H.C. Starck GmbH & Co KG, Leverkusen, Deutschland, Teilchendurchmesser basierend auf der BET-Methode: 9 nm, pH 10,0, Siliciumdioxid-Konzentration: 30 Gew.-%) wurden durch Zugabe von DOWEX^{®} MONOSPHERE^{®} 650C (H) Kationenaustauscherharz auf einen pH-Wert von 2 entionisiert. 666,7 g des entionisierten Kieselsols wurden mit 300 g Isopropanol, 300 g n-Propanol und 1133,3 g Polyol 1 gemischt. Ein Gemisch aus Wasser, Iso- und n-Propanol wurde unter verringertem Druck bei schrittweise von 30 °C bis 75 °C ansteigender Temperatur über einen Zeitraum von 8 Stunden entfernt, wobei die Temperatur in den letzten 1 bis 2 Stunden 75 °C betrug. Es wurde eine stabile, transparente Siliciumdioxid-Dispersion in dem Polyol mit einer Siliciumdioxid-Konzentration von 15 Gew.-% erhalten.

### Beispiel A5:

Zu 300 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 750 g Isopropanol, 750 g n-Propanol und 340 g Polyol 2 hinzugegeben. Ein Gemisch aus Wasser, Iso- und n-Propanol wurde bei vermindertem Druck und schrittweise von 30 °C bis 75 °C ansteigender Temperatur über einen Zeitraum von 8 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 15 Gew.-% erhalten.

### Beispiel A6:

Zu 375 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 1000 g Isopropanol, 500 g n-Propanol und 425 g Polyol 3 hinzugegeben. Ein Gemisch aus Wasser, Iso- und n-Propanol wurde bei vermindertem Druck und schrittweise von 30 °C bis 75 °C über einen Zeitraum von 8 Stunden ansteigender Temperatur entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 15 Gew.-% erhalten.

### Beispiel A7:

Zu 200 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 200 g Isopropanol, 200 g n-Propanol und 160 g Polyol 4 hinzugegeben. Ein Gemisch aus Wasser, Iso- und n-Propanol wurde bei vermindertem Druck und schrittweise von 30 °C bis 75 °C über einen Zeitraum von 6 Stunden destillativ abgetrennt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 20 Gew.-% erhalten.

### Beispiel A8:

Zu 200 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 100 g Isopropanol, 100 g n-Propanol und 226,7 g Polyol 5 hinzugegeben. Ein Gemisch aus Wasser, Iso- und n-Propanol wurde bei vermindertem Druck und schrittweise von 30 °C bis 75 °C über einen Zeitraum von 6 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 15 Gew.-% erhalten.

### Beispiel A9:

Zu 200 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 160 g Isopropanol und 160 g Polyol 6 hinzugegeben. Ein Gemisch aus Wasser und Isopropanol wurde bei vermindertem Druck und schrittweise von 30 °C bis 75 °C über einen Zeitraum von 6 Stunden destillativ abgetrennt, wobei in den letzten 1 bis 2 Stunden die Temperatur 75 °C betrug. Es wurde eine stabile, transparente Siliciumdioxid-Dispersion in dem Polyol- mit einer Siliciumdioxid-Konzentration von 20 Gew.-% erhalten.

### Beispiel A10:

Zu 200 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 100 g Isopropanol, 100 g n-Propanol und 40 g Polyol 7 hinzugegeben. Ein Gemisch aus Wasser, Iso- und n-Propanol wurde bei vermindertem Druck und schrittweise von 30 °C bis 75 °C über einen Zeitraum von 6 Stunden ansteigender Temperatur entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 50 Gew.-% erhalten.

### Beispiel A11:

Zu 1250 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 1000 g Isopropanol, 1000 g n-Propanol und 583,3 g Polyol 8 hinzugegeben. Ein Gemisch aus Wasser, Iso- und n-Propanol wurde bei vermindertem Druck und schrittweise von 30 °C bis 75 °C über einen Zeitraum von 8 Stunden ansteigender Temperatur entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 30 Gew.-% erhalten.

### B. Oberflächenmodifizierung von Siliciumdioxid-Nanopartikeln in Polyolen

Die Siliciumdioxidkonzentration der Dispersion nach Oberflächenmodifizierung bezieht sich auf reines Siliciumdioxid.

### Beispiel B1:

In einem mit einem Rührer ausgestattetem 2L-Glaskolben wurden 500 g der Siliciumdioxid-Dispersion in Polyol 1 aus Beispiel A1 mit einer Siliciumdioxid-Konzentration von 20 Gew.-%, 214,3 g Polyol 1, 10,8 g (0,6 mol) Wasser und 27,2 g (0,2 mol) Methyltrimethoxysilan (von Merck Schuchardt OHG, Hohenbrunn, Deutschland) gemischt. Das erhaltene Gemisch wurde 24 Stunden lang bei 70 °C gerührt. Nach Abkühlenlassen wurden bei verringertem Druck bei 75 °C flüchtige Bestandteile während eines Zeitraumes von 2 Stunden abdestilliert. Eine stabile, transparente Siliciumdioxid-Dispersion in dem Polyol mit einer Siliciumdioxid-Konzentration von 14 Gew.-% wurde erhalten.

### Beispiel B2:

In einem mit einem Rührer ausgestattetem 2L-Glaskolben wurden 500 g der Siliciumdioxid-Dispersion in Polyol 1 aus Beispiel A1 mit einer Siliciumdioxid-Konzentration von 20 Gew.-%, 214,3 g Polyol 1, 4 g (0,22 mol) Wasser und 13,2 g (0,11 mol) Dimethyldimethoxysilan (von Fluorochem, Old Glossop, Großbritannien) gemischt. Das erhaltene Gemisch wurde 24 Stunden lang bei 70 °C gerührt. Nach Abkühlenlassen wurden bei verringertem Druck bei 75 °C flüchtige Bestandteile während eines Zeitraumes von 2 Stunden abdestilliert. Eine stabile, transparente Siliciumdioxid-Dispersion in dem Polyol mit einer Siliciumdioxid-Konzentration von 14 Gew.-% wurde erhalten.

### Beispiel B2b:

In einem mit einem Rührer ausgestattetem 1L-Glaskolben wurden 150 g eines kommerziell erhältlichen sauren wässrigen Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%), 75 g Isopropanol, 75 g n-Propanol und 170 g Polyol 1 gemischt. Dann wurden 4,8 g (0,04 mol) Dimethyldimethoxysilan (von Fluorochem, Old Glossop, Großbritannien) zugegeben und das erhaltene Gemisch wurde 24 Stunden lang bei Raumtemperatur gerührt. Wasser, Iso- und n-Propanol-Gemisch sowie weitere flüchtige Bestandteile wurden bei verringertem Druck und schrittweise von 30 °C auf 75 °C ansteigender Temperatur über einen Zeitraum von 4 Stunden destillativ entfernt, wobei die Temperatur in den letzten 1 bis 2 Stunden 75 °C betrug. Es wurde eine stabile, transparente Siliciumdioxid-Dispersion in dem Polyol mit einer Siliciumdioxid-Konzentration von 15 Gew.-% erhalten.

### Beispiel B3:

In einem mit einem Rührer ausgestattetem 2L-Glaskolben wurden 750 g einer Siliciumdioxid-Dispersion in Polyol 1 aus Beispiel A1 mit einer Siliciumdioxid-Konzentration von 20 Gew.-%, 500 g Polyol 1, 8,9 g (0,5 mol) Wasser und 82,4 g (0,16 mol) einer 6 2 % g e w .-%igen ethanolischen Lösung von Bis(2-hydroxyethyl)-3-aminpropyltriethoxysilan (von ABCR GmbH & Co KG, Karlsruhe, Deutschland) gemischt. Das erhaltene Gemisch wurde 24 Stunden lang bei Raumtemperatur gerührt. Nach Verdampfung flüchtiger Bestandteile bei reduziertem Druck und 75 °C über einen Zeitraum von 2 Stunden wurde eine stabile, transparente Siliciumdioxid-Dispersion in dem Polyol mit einer Siliciumdioxid-Konzentration von 12 Gew.-% erhalten.

### Beispiel B4:

In einem mit einem Rührer ausgestattetem 2L-Glaskolben wurden 300 g der Siliciumdioxid-Dispersion in Polyol 1 aus Beispiel A1 mit einer Siliciumdioxid-Konzentration von 20 Gew.-%, 300 g Polyol 1 und 8,8 g (0,04 mol) 3-Aminopropyltriethoxysilan (von Merck Schuchardt OHG, Hohenbrunn, Deutschland) gemischt. Das erhaltene Gemisch wurde 24 Stunden lang bei 70 °C gerührt. Nach Abkühlenlassen wurden bei verringertem Druck bei 75 °C flüchtige Bestandteile während eines Zeitraumes von 2 Stunden entfernt, wobei eine stabile, transparente Siliciumdioxid-Dispersion in dem Polyol mit einer Siliciumdioxid-Konzentration von 10 Gew.-% erhalten wurde.

### Beispiel B5:

In einem mit einem Rührer ausgestattetem 2L-Glaskolben wurden 300 g der Siliciumdioxid-Dispersion in Polyol 1 aus Beispiel A1 mit einer Siliciumdioxid-Konzentration von 20 Gew.-%, 300 g Polyol 1 und 12,9 g (0,07 mol) 3-Mercaptopropyltrimethoxysilan (von Merck Schuchardt OHG, Hohenbrunn, Deutschland) gemischt. Das erhaltene Gemisch wurde 24 Stunden lang bei 70 °C gerührt. Nach Abkühlenlassen wurden flüchtige Bestandteile bei verringertem Druck bei 75 °C während eines Zeitraumes von 2 Stunden entfernt, wobei eine stabile, transparente Siliciumdioxid-Dispersion in dem Polyol mit einer Siliciumdioxid-Konzentration von 10 Gew.-% erhalten wurde.

### Beispiel B6:

In einem mit einem Rührer ausgestattetem 1 L-Glaskolben werden 440,7 g einer Siliciumdioxid-Dispersion in Polyol 1 aus Beispiel A1 mit einer Siliciumdioxid-Konzentration von 20 Gew.-%, 90 g Polyol 1 und 55 g (0,023 mol) eines mit einem hyperverzweigten Polyol funktionalisierten Triethoxysilan (HBP-Silan) gemischt. Das erhaltene Gemisch wurde 24 Stunden lang bei Raumtemperatur gerührt. Flüchtige Bestandteile wurden bei reduziertem Druck bei 75 °C über einen Zeitraum von 2 Stunden entfernt, wobei eine stabile, transparente Siliciumdioxid-Dispersion in dem Polyol mit einem Siliciumdioxid-Gehalt von 16,6 Gew.-% erhalten wurde. Das mit einem hyperverzweigten Polyol funktionalisierte Triethoxysilan wurde durch Umsetzung von 11,07 g (0,05 mol) 3-Aminopropyltriethoxysilan und 8,71 g (0,05 mol) 2,4-Diisocyanato-1-methylbenzol (2,4-TDI) in 700 mL Dichlormethan über einen Zeitraum von 1 Stunde bei Raumtemperatur erhalten. Dann wurden 97 g (0,05 mol) eines hyperverzweigten Polyols (Mw=1940 g/mol) und eine katalytische Menge Dibutylzinndilaurat zugegeben, das resultierende Gemisch wurde 24 Stunden bei Raumtemperatur gerührt und Dichlormethan bei reduziertem Druck abgetrennt.

### Beispiel B7:

In einem mit einem Rührer ausgestatteten 2L-Glaskolben wurden 600 g einer Siliciumdioxid-Dispersion in Polyol 1 mit einer Siliciumdioxid-Konzentration von 20 Gew.-% aus Beispiel A1, 200 g Polyol 1 und 53,5 g (0,06 mol) Trimethoxysilan (erhältlich durch Umsetzung von 3-(2,3-Epoxypropoxy)propyltrimethoxysilan und Jeffamin XTJ-505) gemischt. Das resultierende Gemisch wurde 24 Stunden lang bei Raumtemperatur gerührt. Flüchtige Bestandteile wurden bei verringertem Druck bei 75 °C über einen Zeitraum von 2 Stunden abgetrennt, wobei eine stabile, transparente Siliciumdioxid-Dispersion in dem Polyol mit einer Siliciumdioxid-Konzentration von 15 Gew.-% erhalten wurde. Zur Herstellung des Silans wurden 28,3 g (0,12 mol) 3-(2,3-Epoxypropoxy)propyltrimethoxysilan (von Merck Schuchardt OHG, Hohenbrunn, Deutschland) und 71,7 g (0,12 mol) Jeffamin XTJ-505 (von Huntsman) gemischt und über Nacht bei 60 °C gerührt.

### Beispiel B8:

In einem mit einem Rührer ausgestattetem 3L-Glaskolben wurden 1000 g der Siliciumdioxid-Dispersion in Polyol 1 aus Beispiel A1 mit einer Siliciumdioxid-Konzentration von 20 Gew.-%, 818 g Polyol 1 und 59,3 g (0,27 mol) N-(3-(Trimethoxysilyl)propyl)ethylendiamin (Z6020 von Dow Corning) gemischt. Das erhaltene Gemisch wurde 24 Stunden lang bei 70 °C gerührt. Nach Abkühlenlassen wurden bei verringertem Druck bei 75 °C flüchtige Bestandteile während eines Zeitraumes von 2 Stunden entfernt, wobei eine stabile, transparente Siliciumdioxid-Dispersion in dem Polyol mit einer Siliciumdioxid-Konzentration von 11 Gew.-% erhalten wurde.

### Beispiel B9:

In einem mit einem Rührer ausgestattetem 1 L-Glaskolben wurden 150 g der Siliciumdioxid-Dispersion in Polyol 1 aus Beispiel A1 mit einer Siliciumdioxid-Konzentration von 20 Gew.-%, 50 g Polyol 1, 1,80 g (0,10 mol) Wasser, 2,72 g (0,02 mol) Methyltrimethoxysilan (von Merck Schuchardt OHG, Hohenbrunn, Deutschland) und 2,40 g (0,02 mol) Dimethyldimethoxysilan (von Fluorochem, Old Glossop, Großbritannien) gemischt. Das erhaltene Gemisch wurde 24 Stunden lang bei 70 °C gerührt. Nach Abkühlenlassen wurden bei verringertem Druck bei 75 °C flüchtige Bestandteile während eines Zeitraumes von 2 Stunden abdestilliert. Eine stabile, transparente Siliciumdioxid-Dispersion in dem Polyol mit einer Siliciumdioxid-Konzentration von 15 Gew.-% wurde erhalten.

### Beispiel B 10:

In einem mit einem Rührer ausgestattetem 1 L-Glaskolben wurden 150 g der Siliciumdioxid-Dispersion in Polyol 1 aus Beispiel A1 mit einer Siliciumdioxid-Konzentration von 20 Gew.-%, 50 g Polyol 1, 0,8 g (0,04 mol) Wasser und 2,04 g (0,015 mol) Methyltrimethoxysilan (von Merck Schuchardt OHG, Hohenbrunn, Deutschland) gemischt und 15 min bei Raumtemperatur gerührt. Zu dieser Mischung wurden 3,32 g (0,015 mol) Aminopropyltriethoxysilan (von Merck Schuchardt OHG, Hohenbrunn, Deutschland) gegeben. Das erhaltene Gemisch wurde 24 Stunden lang bei Raumtemperatur gerührt und danach wurden bei verringertem Druck bei 75 °C flüchtige Bestandteile während eines Zeitraumes von 2 Stunden abdestilliert. Eine stabile, transparente Siliciumdioxid-Dispersion in dem Polyol mit einer Siliciumdioxid-Konzentration von 15 Gew.-% wurde erhalten.

### C. Änderung des pH-Wertes der Siliciumdioxid-Polyol-Dispersionen

### Beispiel C1: Änderung des pH-Wertes der Siliciumdioxid-Dispersion unter Verwendung einer 20%igen Lösung von Natriumethoxid in Ethanol (Referenzbeispiel)

In einem mit einem Rührer ausgestatteten 2L-Glaskolben wurden 1100 g Siliciumdioxid-Dispersion in Polyol 1 mit einer Siliciumdioxid-Konzentration von 20 Gew.-% aus Beispiel A1 mit 471 g Polyol 1 gemischt, wobei eine 14 %ige Siliciumdioxid-Dispersion in dem Polyol erhalten wurde (beim Mischen von 3 g dieser Dispersion mit 17 g deionisiertem Wasser wurde ein pH-Wert von 4,3 erhalten, wobei nach Zugabe von 0,4 g einer 0,1 %igen Cresolrot-Lösung in Ethanol als Säure-Base-Indikator zu dem Gemisch die Farbe nach gelb umschlug). 4,4 g einer 20 %igen Lösung von Natriumethoxid in Ethanol (von Merck Schuchardt OHG, Hohenbrunn, Deutschland) wurden hinzugegeben, das erhaltene Gemisch 30 Minuten lang bei Raumtemperatur gerührt und Ethanol unter verringertem Druck bei 75 °C abgetrennt. Es wurde eine stabile, transparente Siliciumdioxid-Polyol-Dispersion mit einer Siliciumdioxid-Konzentration von 14 Gew.-% erhalten. Beim Vermischen von 3 g der Dispersion mit 17 g deionisiertem Wasser wurde ein pH-Wert von 8,9 erhalten, wobei nach Zugabe von 0,4 g einer 0,1 %igen ethanolischen Lösung von Cresolrot (als Säure-Base-Indikator) zu dem Gemisch die Farbe nach rot umschlug. pH-Werte wurden unter Verwendung eines Hanna Instruments HI 221 pH-Meters, welches mit einer HI 1131 pH-Elektrode ausgestattet war, bestimmt.

### Beispiel C2: Oberflächenmodifikation der Probe aus Beispiel C1

In einem mit einem Rührer ausgestatteten 2L-Glaskolben wurden 785 g der Siliciumdioxid-Dispersion in Polyol 1 mit einer Siliciumdioxid-Konzentration von 14 Gew.-% und einem pH-Wert von 8,9 aus Beispiel C1, 4,3 g (0,24 mol) Wasser und 14,5 g (0,12 mol) Dimethyldimethoxysilan (von Fluorochem, Old Glossop, Großbritannien) gemischt. Das erhaltene Gemisch wurde 24 Stunden lang bei 70 °C gerührt. Nach Abkühlenlassen wurden unter verringertem Druck bei 75 °C flüchtige Bestandteile über einen Zeitraum von 2 Stunden entfernt. Es wurde eine stabile, transparente Siliciumdioxid-Polyol-Dispersion mit einer Siliciumdioxid-Konzentration von 14 Gew.-% erhalten. Beim Mischen von 3 g der Dispersion mit 17 g deionisiertem Wasser wurde ein pH-Wert von 9,5 erhalten, wobei nach Zugabe von 0,4 g einer 0,1 %igen ethanolischen Cresolrot-Lösung (als Säure-Base-Indikator) zu dem Gemisch die Farbe nach rot umschlug. pH-Werte wurden unter Verwendung eines Hanna Instruments HI 221 pH-Meters, welches mit einer HI 1131 pH-Elektrode ausgestattet war, bestimmt.

### Beispiel C3: OberFlächenmodifikation in dem Polyol und anschließende Änderung des pH-Wertes

In einem mit einem Rührer ausgestatteten 2L-Glaskolben wurden 550 g Siliciumdioxid-Dispersion in Polyol 1 mit einer Siliciumdioxid-Konzentration von 20 Gew.-% aus Beispiel A1, 235,7 g Polyol 1, 4,3 g (0,23 mol) Wasser und 14,5 g (0,12 mol) Dimethyldimethoxysilan (von Fluorochem, Old Glossop, Großbritannien) gemischt. Das erhaltene Gemisch wurde 24 Stunden lang bei 70 °C gerührt. Beim Vermischen von 3 g der Dispersion mit 17 g deionisiertem Wasser wurde ein pH-Wert von 4,6 erhalten, wobei nach Zugabe von 0,4 g einer 0,1 %igen ethanolischen Cresolrot-Lösung als Säure-Base-Indikator zu dem Gemisch die Farbe nach gelb umschlug. Nach Abkühlenlassen wurden 2,2 g einer 20%igen ethanolischen Lösung von Natriumethoxid (von Merck Schuchardt OHG, Hohenbrunn, Deutschland) zugegeben. Nach 30 minütigem Rühren wurden bei verringertem Druck bei 75 °C flüchtige Bestandteile über einen Zeitraum von 2 Stunden entfernt. Es wurde eine stabile, transparente Siliciumdioxid-Polyol-Dispersion mit einer Siliciumdioxid-Konzentration von 14 Gew.-% erhalten. Beim Mischen von 3 g der Dispersion mit 17 g deionisiertem Wasser wurde ein pH-Wert von 10,2 erhalten, wobei nach Zugabe von 0,4 g einer 0,1 %igen ethanolischen Cresoirot-Lösung (als Säure-Base-Indikator) zu dem Gemisch die Farbe nach rot umschlug. pH-Werte wurden unter Verwendung eines Hanna Instruments HI 221 pH-Meters, welches mit einer HI 1131 pH-Elektrode ausgestattet war, bestimmt.

### D. Oberflächenmodifikation von Siliciumdioxid-Nanopartikeln in Wasser/Lösungsmittel und Transfer der modifizierten Siliciumdioxid-Partikel in das Polyol

### Beispiel D1:

In einem mit einem Rührer ausgestatteten 2L-Glaskolben werden 500 g eines kommerziell erhältlichen wässrigen sauren Kieselsols (Levasil® 200E/20% von H.C. Starck GmbH & Co KG, Leverkusen, Deutschland, Teilchendurchmesser basierend auf BET-Methode: 15 nm, pH 2,5, Siliciumdioxid-Konzentration: 20 Gew.-%), 250 g Isopropanol und 250 g n-Propanol gemischt. Dann wurden 15 g (0,11 mol) Methyltrimethoxysilan (von Merck Schuchardt OHG, Hohenbrunn, Deutschland) zugegeben und das erhaltene Gemisch 24 Stunden lang bei Raumtemperatur gerührt. Nach abgeschlossener Silanisierung wurden 400 g Polyol 1 zugegeben, und nach Rühren Wasser, Isopropanol, n-Propanol und weitere flüchtige Bestandteile bei verringertem Druck und schrittweise von 30 °C auf 75 °C ansteigender Temperatur über einen Zeitraum von 8 Stunden abgetrennt, wobei die Temperatur in den letzten 1 bis 2 Stunden 75 °C betrug. Es wurde eine stabile, transparente Siliciumdioxid-Polyol-Dispersion mit einer Siliciumdioxid-Konzentration von 20 Gew.-% erhalten.

### Beispiel D2:

500 g eines kommerziell erhältlichen wässrigen Kieselsols (Levasil® 200/30% von H.C. Starck GmbH & Co KG, Leverkusen, Deutschland, Teilchendurchmesser basierend auf der BET-Methode: 15 nm, pH 9,0, Siliciumdioxid-Konzentration: 30 Gew.-%) wurden durch Zugabe von DOWEX^{®} MONOSPHERE^{®} 650C (H) Kationenaustauscherharz bis zu einem pH-Wert von 2,1 entionisiert. 400 g des entionisierten Kieselsols wurden mit 200 g Isopropanol und 200 g n-Propanol gemischt. Dann wurden 18 g (0,13 mol) Methyltrimethoxysilan (von Merck Schuchardt OHG, Hohenbrunn, Deutschland) zugegeben und das erhaltene Gemisch 24 Stunden lang bei Raumtemperatur gerührt. Nach abgeschlossener Silanisierung wurden 480 g Polyol 1 zugegeben, und nach Rühren wurden Wasser, Isopropanol, n-Propanol und weitere flüchtige Bestandteile unter reduziertem Druck und schrittweise von 30 °C bis 75 °C ansteigender Temperatur über einen Zeitraum von 8 Stunden abgetrennt, wobei die Temperatur in den letzten 1 bis 2 Stunden 75 °C betrug. Es wurde eine stabile, transparente Siliciumdioxid-Polyol-Dispersion in dem Polyol mit einer Siliciumdioxid-Konzentration von 20 Gew.-% erhalten.

### Beispiel D3:

In einem mit einem Rührer ausgerüsteten 1 L-Glaskolben wurden 250 g eines kommerziell erhältlichen sauren wässrigen Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) und 250 g Isopropanol gemischt. Dann wurden 21,5 g (0,026 mol) Trimethoxysilan (erhalten durch Umsetzung von 3-(2,3-Epoxypropoxy)propyltrimethoxysilan und Jeffamin XTJ-505) zugegeben und das erhaltene Gemisch 24 Stunden lang bei Raumtemperatur gerührt. Nach abgeschlossener Silanisierung wurden 450 g Polyol 1 zugegeben, und nach Rühren Wasser, Isopropanol und weitere flüchtige Bestandteile unter verringertem Druck und schrittweise von 30 °C bis 75 °C ansteigender Temperatur über einen Zeitraum von 6 Stunden abgetrennt, wobei die Temperatur in den letzten 1 bis 2 Stunden 75 °C betrug. Es wurde eine stabile, transparente Siliciumdioxid-Polyol-Dispersion mit einer Siliciumdioxid-Konzentration von 10 Gew.-% erhalten. Synthese des Silans: 28,3 g (0,12 mol) 3-(2,3-Epoxypropoxy)propyltrimethoxysilan (von Merck Schuchardt OHG, Hohenbrunn, Deutschland) und 71,7 g (0,12 mol) Jeffamin XTJ-505 (von Huntsman) wurde gemischt und über Nacht bei 60 °C gerührt.

### E. Mechanische Eigenschaften der mit den Siliciumdioxid-Nanopartikeln verstärkten Polyurethanelastomeren

Die Herstellung von Proben für die mechanische Prüfung wurde mit in der Polyurethan-Industrie üblichen Verfahren durchgeführt. Die zur Herstellung der Polymermaterialien der Beispiele verwendeten Einsatzstoffe sind in Tabelle 1 a-b wiedergegeben.

Das Isocyanat wurde zu dem gut durchmischten und homogenisierten Blend von Polyol mit Siliciumdioxid-Teilchen und anderen Einsatzstoffen der Polyurethan-Formulierung zugegeben. Die Formulierungen wurden in eine offene Form gegossen, reagieren gelassen und bei 50 °C zu einer Platte mit den Abmessungen 200x150x5 mm ausgehärtet. Das erhaltene Material wurde bei 60°C 24 Stunden lang getempert, und die mechanischen Eigenschaften wurden an entsprechenden Probekörpern, welche aus dem mittleren Teil der Platte herausgeschnitten waren, bestimmt. Das fertige Polyurethan enthielt 1,5 bis 9,8 Gew.-% SiO₂. Die Messungen wurden mit den zur Prüfung von Polyurethan-Polymeren üblichen Testverfahren durchgeführt.

### Beispiel E1: Herstellung von Polyurethanelastomeren - Referenzbeispiel

Zu 210,7 g Polyol 1 und 8,4 g 1,4-Butandiol wurde ein Gemisch aus 0,94 g eines silikonhaltigen Tensids (Tegostab® B4113), 1,06 g einer 33 gew.-%igen Lösung von 1,4-Diazabicyclo[2.2.2]octane in TEG (Dabco® 33LV) und 14,08 g K-Ca-Na-Zeolith-Paste zugegeben. Das erhaltene Gemisch wurde in einem Hochgeschwindigkeitsmischer 1 Minute lang gemischt und dann 30 Minuten bei Raumtemperatur belassen. 64,8 g eines handelsüblichen MDI-Prepolymer für flexible Elastomere und Formweichschaumstoffe mit einer NCO-Gehalt von 23% (Lupranat® MP 102) wurden zugegeben und nach 1 minütigem Rühren in einem Hochgeschwindigkeitsmischer in eine offene Form gegossen, reagieren gelassen und bei 50 °C zu einer Platte mit den Abmessungen 200x150x5 mm ausgehärtet. Das erhaltene Material wurde bei 60 °C 24 Stunden lang getempert, und die mechanischen Eigenschaften wurden an entsprechenden Probekörpern, welche aus dem mittleren Teil der Platte herausgeschnitten waren, bestimmt.

### Beispiel E2-3 (siehe Tabelle 2) Herstellung eines Polyurethanelastomers enthaltend Siliciumdioxid-Nanopartikel

126,1 g Dispersion modifizierter Siliciumdioxid-Nanopartikel in Polyol 1 mit einer Siliciumdioxid-Konzentration von 14 Gew.-% aus Beispiel B1, 89,8 g Polyol 1 und 7,95 g 1,4-Butandiol wurden gemischt und zu diesem Gemisch wurden 0,88 g Tegostab® B4113, 0,99 g Dabco® 33LV und 13,25 g K-Ca-Na-Zeolith-Paste gegeben. Das erhaltene Gemisch wurde in einem Hochgeschwindigkeitsmischer 1 Minute lang homogenisiert und dann 30 Minuten bei Raumtemperatur belassen. 61 g Lupranat® MP 102 wurden zugegeben (was einen Isocyanatindex von 105 ergibt) und nach 1 minütigem Rühren in einem Hochgeschwindigkeitsmischer wurde das Gemisch in eine offene Form gegossen, reagieren gelassen und bei 50 °C zu Platten mit den Abmessungen 200x150x5 mm ausgehärtet. Das erhaltene Material wurde bei 60 °C 24 Stunden lang getempert, und die mechanischen Eigenschaften an entsprechenden Probekörpern, welche aus dem Mittelteil der Platte herausgeschnitten waren, bestimmt. Das fertige Polyurethan enthielt 5,9 Gew.-% SiO₂.

In ähnlicher Weise wurden weitere Elastomere unter Verwendung verschiedener Teilchen-Konzentrationen in dem Elastomer hergestellt. Dies wurde durch Verwendung geringerer Mengen des konzentrierten Polyol-Teilchen-Blends und größeren Mengen des reinen Trägerpolyols (siehe Beispiele E2-1 bis E2-4) erreicht, wobei die Dispersion aus B1 als konzentrierter Polyol-Teilchen-Blend verwendet wurde. In ähnlicher Weise wurden weitere Elastomere unter Verwendung von Teilchen mit unterschiedlicher Oberflächenmodifikation und unter Verwendung von nach unterschiedlichen Verfahren modifizierten Teilchen hergestellt.

In den Beispielen E3-1 bis E3-5 wurde ein konzentrierter Polyol-Teilchen-Blend aus Beispiel B2 verwendet, in den Beispielen E4-1 bis E4-4 ein konzentrierter Polyol-Teilchen-Blend aus Beispiel B3, in den Beispielen E5-1 bis E5-5 ein konzentrierter Polyol-Teilchen-Blend aus Beispiel B4, in den Beispielen E6-1 bis E6-3 ein konzentrierter Polyol-Teilchen-Blend aus Beispiel B6, in den Beispielen E7-1 bis E7-4 ein konzentrierter Polyol-Teilchen-Blend aus Beispiel D1 und in den Beispielen E8-1 bis E8-2 ein konzentrierter Polyol-Teilchen-Blend aus Beispiel D3 verwendet.

**Tabelle 1a: Polyole**

| **Polyol** | **Struktur** | **OH-Zahl** | **EO-Gehalt** |
|---|---|---|---|
| Polyol 1 | GLY - PO - EO | 28 | 14,0 |
| Polyol 2 | PTHF | 112 | 0,0 |
| Polyol 3 | PG - PO | 28 | 0,0 |
| Polyol 4 | PG - PO - EO | 29 | 18,5 |
| Polyol 5 | GLY - PO - EO/PO - EO | 42 | 72,5 |
| Polyol 6 | GLY - PO | 400 | 0,0 |
| Polyol 7 | GLY - PO | 805 | 0,0 |
| Polyol 8 | DPG - PO - EO | 63 | 25,0 |

| | | | |
|---|---|---|---|
| GLY = Glycerin, EO = Ethylenoxid, PO = Propylenoxid, DPG = Dipropylenglykol | | | |

**Tabelle 1b: Isocyanate und Additive**

| **Handelsname** | **Hersteller** |
|---|---|
| 1,4-Butandiol | BASF |
| Lupranat MP 102 | BASF |
| Isocyanat 1 | BASF |
| Tegostab B 4113 | Goldschmidt |
| Tegostab B 8680 | Goldschmidt |
| K-Ca-Na Zeolith-Paste | UOP |
| Dabco 33 LV | Air products |
| Niax A1 | Momentive |
| Jeffamin XTJ-505 | Huntsman |

**Tabelle 1 c: Kieselsole**

| **Name** | **Hersteller** | **Teilchengröße (ca. nm)** | **SiO₂ (wt%)** | **Oberfläche (m²/g)** | **pH** |
|---|---|---|---|---|---|
| Levasil 100/45% | H.C. Starck | 30 | 45 | 100 | 10,0 |
| | | | | | |
| Levasil 200/30% | H.C. Starck | 15 | 30 | 200 | 9,0 |
| Levasil 200A/40% | H.C. Starck | 15 | 40 | 200 | 10,0 |
| Levasil 200E/20% | H.C. Starck | 15 | 20 | 200 | 2,5 |
| | | | | | |
| Levasil 300/30% | H.C. Starck | 9 | 30 | 300 | 10,0 |

**Tabelle 1d: Silane**

| **Substanz** | **Hersteller** | **Formel** | **Molekulargewicht** |
|---|---|---|---|
| Methyltrimethoxysilane | Merck | CH₃(CH₃O)₃Si | 136,22 |
| Dimethyldimethoxysilane | fluorochem | (CH₃)₂(CH₃O)₂Si | 120,22 |
| Bis(2-hydroxyethyl)-3-aminopropyltriethoxysilane | ABCR | (C₂H₄OH)₂NC₃H₆(C₂H₅O)₃Si | 309,48 |
| Aminopropyltriethoxysilane | Merck | NH₂C₃H₆(C₂H₅O)₃Si | 221,37 |
| 3-Mercaptopropyltrimethoxysilan | Merck | 3HC₃H₆(CH₃O)₃Si | 196,34 |
| 3-(2,3-Epoxypropoxy)propyltrimethoxysilan | Merck | CH₃(C₂H₂O)OC₃H₆(CH₃O)₃Si | 236,34 |
| N-(3-(Trimethoxysilyl)propyl)ethylendiamin | Dow Corning | NH₂C₂H₄NHC₃H₆(CH₃O)₃Si | 222,36 |

**Tabelle 2a:**

| Beispiel | SiO₂-Gehalt des Gießelastomers [%] | offene Zeit [min] | Dichte [g/cm³] | Shore-Härte A | Zugfestigkeit [MPa] | Reißdehnung [%] | Weiterreißwiderstand [kN/m] | Abrieb [mm³] |
|---|---|---|---|---|---|---|---|---|
| E1 | 0 | 4,5 | 1,092 | 61 | 4 | 220 | 6 | 473 |
| E2-1 | 1,5 | 4,5 | 1,101 | 60 | 4 | 230 | 6 | 341 |
| E2-2 | 3,7 | 5,0 | 1,115 | 62 | 5 | 290 | 7 | 267 |
| E2-3 | 5,9 | 5,5 | 1,130 | 60 | 7 | 340 | 7 | 228 |
| E2-4 | 7,9 | 6,0 | 1,141 | 61 | 7 | 350 | 8 | 201 |
| E3-1 | 1,5 | 4,5 | 1,100 | 61 | 4 | 210 | 7 | 350 |
| E3-2 | 3,7 | 5,5 | 1,113 | 61 | 4 | 230 | 7 | 284 |
| E3-3 | 5,9 | 6,0 | 1,119 | 62 | 4 | 230 | 7 | 248 |
| E3-4 | 7,9 | 6,5 | 1,130 | 61 | 5 | 270 | 8 | 217 |
| E3-5 | 9,8 | 6,5 | 1,149 | 60 | 5 | 280 | 8 | 201 |
| E4-1 | 1,5 | 4,0 | 1,095 | 61 | 4 | 210 | 6 | 353 |
| E4-2 | 3,7 | 5,0 | 1,113 | 59 | 4 | 260 | 7 | 319 |
| E4-3 | 5,9 | 4,5 | 1,122 | 57 | 5 | 330 | 9 | 255 |
| E4-4 | 7,9 | 2,5 | 1,129 | 53 | 6 | 380 | 9 | 310 |
| E5-1 | 1,5 | 4,0 | 1,097 | 61 | 4 | 250 | 6 | 379 |
| E5-2 | 3,7 | 4,0 | 1,111 | 62 | 4 | 190 | 7 | 300 |
| E5-3 | 5,9 | 4,5 | 1,124 | 62 | 5 | 220 | 7 | 260 |
| E5-4 | 7,9 | 3,5 | 1,140 | 61 | 7 | 290 | 7 | 188 |
| E6-1 | 1,5 | 4,0 | 1,097 | 61 | 4 | 220 | 6 | 406 |
| E6-2 | 3,7 | 5,0 | 1,108 | 62 | 5 | 240 | 7 | 372 |
| E6-3 | 5,9 | 5,0 | 1,106 | 61 | 4 | 170 | 7 | 319 |

**Tabelle 2b:**

| Beispiel | SiO₂-Gehalt des Gießelastomers [%] | offene Zeit [min] | Dichte [g/cm³] | Shore-Härte A | Zugfestigkeit [MPa] | Reißdehnung [%] | Weiterreißwiderstand [kN/m] | Abrieb [mm³] |
|---|---|---|---|---|---|---|---|---|
| E1 | 0 | 4,5 | 1,092 | 61 | 4 | 220 | 6 | 473 |
| E7-1 | 1,5 | 4,5 | 1,099 | 60 | 4 | 240 | 7 | 336 |
| E7-2 | 3,7 | 5,5 | 1,111 | 58 | 4 | 240 | 7 | 267 |
| E7-3 | 5,9 | 6,0 | 1,126 | 58 | 4 | 230 | 7 | 234 |
| E7-4 | 7,9 | 6,5 | 1,138 | 57 | 4 | 270 | 8 | 218 |
| E8-1 | 3,5 | 5,5 | 1,113 | 59 | 6 | 320 | 7 | 281 |
| E8-2 | 7,0 | 11,0 | 1,118 | 51 | 4 | 270 | 11 | 288 |

### F. Mechanische Eigenschaften von mit Siliciumdioxid-Nanopartikeln verstärkten Polyurethanschäumen

Die Herstellung von Proben für die mechanische Prüfung wurde mit in der Polyurethan-Industrie üblichen Verfahren durchgeführt. Die zur Herstellung der Polymermaterialien der Beispiele verwendeten Einsatzstoffe sind in Tabelle 1a-b wiedergegeben.

Das Isocyanat wurde zu dem gut durchmischten und homogenisiertem Blend von Polyol mit Siliciumdioxid-Teilchen und anderen Einsatzstoffen der Polyurethan-Formulierung zugegeben. Die Formulierungen wurden in eine offene Form gegossen, reagieren gelassen und bei Raumtemperatur ausgehärtet. Die mechanischen Eigenschaften wurden an Testkörpern, welche aus der Mitte des Schaumblocks geschnitten waren, entsprechend Standard-Testmethoden bestimmt. Die so erhaltenen Polyurethanschäume enthielten 2,0 bis 3,9 Gew.-% SiO₂.

### Beispiel F1: Herstellung eines flexiblen Schaums - Referenzbeispiel

Zu 306,2 g Polyol 1 wurden 0,46 g Tegostab® B4113, 0,46 g eines silikonhaltigen Tensids (Tegostab® B8680), 1,53 g Dabco® 33LV und 0,46 g einer 70 gew.-%igen Lösung von Bis(N,N-dimethylaminoethyl)ether in DPG (Niax® A1) als Katalysator zugegeben. Der erhaltene Blend wurde mit einem Laborrührer gemischt. 9,19 g Wasser wurden zugegeben. Das Gemisch wurde mit einem Laborrührer 1 Minute lang homogenisiert und dann 30 Minuten bei Raumtemperatur belassen. 131,7 g Isocyanat 1 (ein Gemisch aus 4,4'-MDI, 2,4'-MDI und Polymer-MDI in einem Verhältnis von 42,0 / 21,0 / 37,0 mit einem NCO-Wert von 31,3% und Fn = 2,25) wurden zugegeben. Nach 10 Sekunden langem Rühren mit einem Laborrührer bei 1500 rpm wurde das Gemisch in eine offene Form gegossen, reagieren gelassen und bei Raumtemperatur ausgehärtet, wobei ein 6 L Schaumblock erhalten wurde. Nach vollständiger Aushärtung bei Raumtemperatur über einen Zeitraum von 24 Stunden wurde der Schaum entformt, und die mechanischen Eigenschaften wurden bestimmt.

### Beispiel F2: Herstellung eines flexiblen Schaums enthaltend Siliciumdioxid-Nanopartikel

176 g der silanisierten Siliciumdioxid-Dispersion in Polyol 1 mit einer Siliciumdioxid-Konzentration von 10 Gew.-% aus Beispiel B4 und 134,9 g Polyol 1 wurden vermischt und zu diesem Blend 0,44 g Tegostab® B4113, 0,44 g Tegostab® B8680, 2,05 g Dabco® 33LV und 0,44 g Niax® A1 gegeben. Der erhaltene Blend wurde mit einem Laborrührer gemischt. 8,8 g Wasser wurden hinzugegeben. Das Gemisch wurde mit einem Laborrührer 1 Minute lang homogenisiert und dann bei Raumtemperatur 30 Minuten lang belassen. 126,9 g Isocyanat 1 wurden zugegeben und nach 10 Sekunden langem Rühren mit einem Laborrührer bei 1500 rpm wurde das Gemisch in eine offene Form gegossen, reagieren gelassen und bei Raumtemperatur ausgehärtet, wobei ein 6 L-Schaumblock erhalten wurde. Nach vollständigem Aushärten bei Raumtemperatur über einen Zeitraum von 24 Stunden wurde der Schaum entformt, und die mechanischen Eigenschaften wurden bestimmt. Der fertige Polyurethanschaum enthielt 3,9 Gew.-% SiO₂.

Wie Tabelle 3 entnommen werden kann, werden durch Zugabe des Siliciumdioxids die Druckverformungswerte verbessert.

**Tabelle 3:**

| | Einheit | F1 | F2 |
|---|---|---|---|
| Startzeit | s | 8 | 9 |
| Abbindezeit | s | 47 | 47 |
| Steigzeit | s | 85 | 83 |
| Stauchhärte bei 25% Stauchung | kPa | 1,9 | 2,3 |
| Stauchhärte bei 40% Stauchung | kPa | 2,5 | 3,1 |
| Stauchhärte bei 65% Stauchung | kPa | 6,3 | 8,1 |
| | | | |

| | Einheit | F1 | F2 |
|---|---|---|---|
| Hysterese 70% | % | 26,4 | 27,7 |
| Dichte | kg/m³ | 41,6 | 45,6 |
| Druckverformungsrest 50% | % | 4,6 | 3,9 |

| Zugfestigkeit | kPa | 137 | 145 |
|---|---|---|---|
| Reißdehnung | % | 121 | 117 |
| Luftdurchlässigkeit | dm³/s | 1,04 | 1,00 |
| Druckverformungsrest feuchte Bedingungen | % | 15,1 | 11,5 |
| Rückprallelastizität | % | 56 | 56 |
| Weiterreißwiderstand | N/mm | 0,53 | 0,56 |
| Druckverformungsrest 75% | % | 8,1 | 6,1 |
| Druckverformungsrest nach Feuchtwärmelagerung 1 Zyklus | % | 11,3 | 9,8 |
| Druckverformungsrest nach Feuchtwärmelagerung 3 Zyklen | % | 14,6 | 11,8 |

### Beispiel F3: Herstellung von Prepolymeren

775,7 g Isocyanat 1 wurden mit 224,3 g der Siliciumdioxid-Dispersion in Polyol 1 aus Beispiel B1 mit einer Siliciumdioxid-Konzentration von 14 Gew.-% gemischt. Das erhaltene Gemisch wurde 3 Stunden lang bei 80 °C gerührt, wobei eine stabile Siliciumdioxid-Dispersion in dem Prepolymer mit einer Siliciumdioxid-Konzentration von 3,1 Gew.-% erhalten wurde. Das Prepolymer kann zur Herstellung von Weichschaum verwendet werden.

### Vergleichsbeispiele

### Beispiel G1:

300 g eines kommerziell erhältlichen sauren wässrigen Kieselsols (Levasil® 200E/20% von H.C. Stark GmbH & Co KG, Leverkusen, Deutschland, Teilchendurchmesser basierend auf BET-Methode: 15 nm, pH 2,5, Siliciumdioxid-Konzentration: 20 Gew.-%) und 300 g Isopropanol wurden gemischt. Nach langsamer Zugabe von 32,9 g einer 62 %igen ethanolischen Lösung von Bis(2-hydroxyethyl)-3-aminopropyltriethoxysilan (von ABCR GmbH & Co KG, Karlsruhe, Deutschland) wurde ein gelartiges Produkt erhalten.

### Beispiel G2:

50 g eines kommerziell erhältlichen sauren wässrigen Kieselsols (Levasil® 200E/20% von H.C. Stark GmbH & Co KG, Leverkusen, Deutschland, Teilchendurchmesser basierend auf BET-Methode: 15 nm, pH 2,5, Siliciumdioxid-Konzentration: 20 Gew.-%) und 360 g Isopropanol wurden gemischt. Nach langsamer Zugabe von 5,5 g einer 62 %igen ethanolischen Lösung von Bis(2-hydroxyethyl)-3-aminopropyltriethoxysilan (von ABCR GmbH & Co KG, Karlsruhe, Deutschland) wurde ein gelartiges Produkt erhalten.

### Beispiel G3:

300 g eines kommerziell erhältlichen sauren wässrigen Siliciumdioxid-Sols (Levasil® 200E/20% von H.C. Stark GmbH & Co KG, Leverkusen, Deutschland, Teilchendurchmesser basierend auf BET-Methode: 15 nm, pH 2,5, Siliciumdioxid-Konzentration: 20 Gew.-%) wurden mit 300 g Wasser auf einen Siliciumdioxid-Gehalt von 10 Gew.-% verdünnt. Nach langsamer Zugabe von 32,9 g einer 62 %igen ethanolischen Lösung von Bis(2-hydroxyethyl)-3-aminopropyltriethoxysilan (von ABCR GmbH & Co KG, Karlsruhe, Deutschland) wurde ein gelartiges Produkt erhalten.

### Beispiel G4:

200 g eines kommerziell erhältlichen, alkalistabilisierten, wässrigen Kieselsols (Levasil® 200/30% von H.C. Stark GmbH & Co KG, Leverkusen, Deutschland, Teilchendurchmesser basierend auf BET-Methode: 15 nm, pH 9,0, Siliciumdioxid-Konzentration: 30 Gew.-%) wurden mit 130 g Wasser und 270 g Isopropanol auf einen Siliciumdioxid-Gehalt von 10 Gew.-% verdünnt. Nach langsamer Zugabe von 32,9 g einer 62 %igen ethanolischen Lösung von Bis(2-hydroxyethyl)-3-aminopropyltriethoxysilan (von ABCR GmbH & Co KG, Karlsruhe, Deutschland) wurde ein gelartiges Produkt erhalten.

### Beispiel G5:

200 g eines kommerziell erhältlichen, alkalistabilisierten, wässrigen Kieselsols (Levasil® 200/30% von H.C. Stark GmbH & Co KG, Leverkusen, Deutschland, Teilchendurchmesser basierend auf BET-Methode: 15 nm, pH 9,0, Siliciumdioxid-Konzentration: 30 Gew.-%) wurden mit 400 g Wasser auf einen Siliciumdioxid-Gehalt von 10 Gew.-% verdünnt. 32,9 g einer 62 %igen ethanolischen Lösung von Bis(2-hydroxyethyl)-3-aminopropyltriethoxysilan (von ABCR GmbH & Co KG, Karlsruhe, Deutschland) wurden langsam zugegeben, und die erhaltene Lösung wurde bei Raumtemperatur 24 Stunden lang gerührt. Aufgrund der Gelbildung waren weder ein direkter Transfer in Polyol 1 noch ein Vermischen mit Isopropanol und anschließender Transfer in Polyol 1 möglich.

### Beispiel G6:

200 g eines kommerziell erhältlichen, alkalistabilisierten, wässrigen Kieselsols (Levasil® 200/30% von H.C. Stark GmbH & Co KG, Leverkusen, Deutschland, Teilchendurchmesser basierend auf BET-Methode: 15 nm, pH 9,0, Siliciumdioxid-Konzentration: 30 Gew.-%) wurden mit 400 g Wasser auf einen Siliciumdioxid-Gehalt von 10 Gew.-% verdünnt. 32,9 g einer 62 %igen ethanolischen Lösung von Bis(2-Hydroxyethyl)-3-aminopropyltriethoxysilan (von ABCR GmbH & Co KG, Karlsruhe, Deutschland) wurden langsam zugegeben, und die erhaltene Lösung wurde bei Raumtemperatur 24 Stunden lang gerührt, anschließend durch Zugabe von DOWEX^{®} MO-NOSPHERE^{®} 650C (H) Kationenaustauscherharz bis zu einem pH-Wert von 4 entionisiert. Das entionisierte Kieselsol wurde mit 540 g Isopropanol und 540 g Polyol 1 gemischt. Nach dem Abdampfen des Wasser-Isopropanol-Gemischs unter vermindertem Druck bei 75 °C wurde ein gelartiges Produkt erhalten.

### Beispiel G7:

200 g eines kommerziell erhältlichen, alkalistabilisierten, wässrigen Kieselsols (Levasil® 200/30% von H.C. Stark GmbH & Co KG, Leverkusen, Deutschland, Teilchendurchmesser basierend auf BET-Methode: 15 nm, p H 9,0, Siliciumdioxid-Konzentration: 30 Gew.-%) wurden mit 400 g Wasser auf einen Siliciumdioxid-Gehalt von 10 Gew.-% verdünnt. Nach Zugabe von 14,6 g von 3-Aminopropyltriethoxysilan (von Merck Schuchardt OHG, Hohenbrunn, Deutschland) wurde ein Gel erhalten.

### Beispiel G8:

200 g eines kommerziell erhältlichen, alkalistabilisierten, wässrigen Kieselsols (Levasil® 200/30% von H.C. Stark GmbH & Co KG, Leverkusen, Deutschland, Teilchendurchmesser basierend auf BET-Methode: 15 nm, pH 9,0, Siliciumdioxid-Konzentration: 30 Gew.-%) wurden mit 400 g Wasser auf einen Siliciumdioxid-Gehalt von 10 Gew.-% verdünnt. 8,9 g 3-Aminopropyltriethoxysilan (von Merck Schuchardt OHG, Hohenbrunn, Deutschland) wurden langsam zugegeben und die resultierende Lösung wurde 18 Stunden bei Raumtemperatur gerührt. Aufgrund von Gelbildung war weder ein direkter Transfer in Polyol 1 noch ein Transfer in Polyol 1 nach Vermischen mit Isopropanol möglich.

### Beispiel G9:

200 g eines kommerziell erhältlichen, alkalistabilisierten, wässrigen Kieselsols (Levasil® 200/30% von H.C. Stark GmbH & Co KG, Leverkusen, Deutschland, Teilchendurchmesser basierend auf BET-Methode: 15 nm, pH 9,0, Siliciumdioxid-Konzentration: 30 Gew.-%) wurden mit 400 g Wasser auf einen Siliciumdioxid-Gehalt von 10 Gew.-% verdünnt. 8,9 g 3-Aminopropyltriethoxysilan (von Merck Schuchardt OHG, Hohenbrunn, Deutschland) wurden langsam zugegeben und die erhaltene Lösung wurde 18 Stunden lang bei Raumtemperatur gerührt. Nach Zugabe von DOWEX^{®} MONOSPHERE^{®} 650C (H) Kationenaustauscherharz wurde das silanisierte Sol schnell gelartig.

### Beispiel G10:

100 g eines kommerziell erhältlichen, alkalistabilisierten, wässrigen Kieselsols (Levasil® 200/30% von H.C. Stark GmbH & Co KG, Leverkusen, Deutschland, Teilchendurchmesser basierend auf BET-Methode: 15 nm, pH 9,0, Siliciumdioxid-Konzentration: 30 Gew.-%) wurden mit 120 g Methanol verdünnt. 6,6 g 3-Aminopropyltriethoxysilan (von Merck Schuchardt OHG, Hohenbrunn, Deutschland) wurden in 100 g Methanol gelöst, und die erhaltene Lösung wurde langsam mit einer Geschwindigkeit von 10 g/h zu dem verdünnten Sol zugegeben. Nach vollständiger Zugabe wurde die Lösung 5 Stunden lang bei Raumtemperatur weiter gerührt. Nach Zugabe von DOWEX^{®} MONOSPHERE^{®} 650C (H) Kationenaustauscherharz wurde das bereits trübe silanisierte Sol schnell gelartig.

### Beispiel G11:

100 g eines kommerziell erhältlichen, alkalistabilisierten, wässrigen Kieselsols (Levasil® 200/30% von H.C. Stark GmbH & Co KG, Leverkusen, Deutschland, Teilchendurchmesser basierend auf BET-Methode: 15 nm, pH 9,0, Siliciumdioxid-Konzentration: 30 Gew.-%) wurden mit 120 g Methanol verdünnt. 6,6 g 3-Aminopropyltriethoxysilan (von Merck Schuchardt OHG, Hohenbrunn, Deutschland) wurden in 100 g Methanol gelöst, und die erhaltene Lösung wurde langsam mit einer Geschwindigkeit von 10 g/h zu dem verdünnten Sol zugegeben. Nach vollständiger Zugabe wurde die bereits trübe Lösung 5 Stunden lang bei Raumtemperatur weiter gerührt. Nach Zugabe von 270 g Polyol 1 wurde das silanisierte Sol schnell gelartig.

### Beispiel G12:

300 g eines kommerziell erhältlichen sauren wässrigen Kieselsols (Levasil® 200E/20% von H.C. Stark GmbH & Co KG, Leverkusen, Deutschland, Teilchendurchmesser basierend auf BET-Methode: 15 nm, pH 2,5, Siliciumdioxid-Konzentration: 20 Gew.-%) und 300 g Isopropanol wurden gemischt. Nach langsamer Zugabe von 13,3 g 3-Aminopropyltriethoxysilan (von Merck Schuchardt OHG, Hohenbrunn, Deutschland) wurde ein gelartiges Produkt erhalten.

## Patentansprüche

1. Verfahren zur Herstellung von silikathaltigen Polyolen, umfassend die Schritte
(i) Versetzen eines wässrigen Kieselsols (K) mit einem mittleren Partikeldurchmesser, basierend auf der BET-Methode, von 1 bis 150 nm mit einem Gehalt an Kieselsäure, berechnet als SiO₂, von 1 bis 60 Gew.-% mit einem pH-Wert von 1 bis 6 mit der 0,5 bis 5-fachen Menge, bezogen auf Wasser, an mindestens einem organischen Lösungsmittel (L), ausgewählt aus der Gruppe bestehend aus Methanol, Ethanol, 1-Propanol, 2-Propanol, 1-Butanol, 2-Butanol, 2-Methyl-2-propanol, 1-Chlor-2-Propanol, Cyclopentanol, Cyclohexanol, 1,4-Dioxan, Tetrahydrofuran, 1-Methoxy-2-propanol, 1-Ethoxy-2-propanol, 2-Ethoxyethanol, 2-Methyl-2-propanol, 2-Methoxyethanol, Dimethylformamid, Acetonitril, Dimethylsulfoxid, Aceton, Methylethylketon und Ethylacetat, sowie
(ii) Versetzen des so erhaltenen Gemisches mit einem Polyol,
(iii) zumindest teilweises Abdestillieren des organischen Lösungsmittels (L) und Wasser,
(iv) Versetzen mit mindestens einer Verbindung (S), die mindestens eine mindestens einfach alkoxylierte Silylgruppe und mindestens einen Alkyl-, Cycloalkyl- oder Aryl-Substituenten, der Heteroatome enthalten kann, aufweist, wobei dieser Substituent gegebenenfalls eine Gruppe aufweist, die reaktiv gegenüber einem Alkohol, einem Amin oder einem Isocyanat ist, in einer Menge von 0,1 bis 30 mol-%, bezogen auf den SiO₂-Gehalt,
(v) optional Einstellen des pH-Wertes des silikathaltigen Polyols auf einen Wert von 7 bis 12 durch Zugabe einer stark basischen Verbindung, ausgewählt aus Alkalihydroxiden und Alkalimetallalkoholaten,
wobei der Schritt (v) auch zwischen den Schritten (iii) und (iv) durchgeführt werden kann.

2. Verfahren nach Anspruch 1, **dadurch gekennzeichnet, dass** der pH-Wert des in Schritt (i) eingesetzten wässrigen Kieselsols (K) 2 bis 6, dessen mittlerer Partikeldurchmesser 5 bis 150 nm und dessen Gehalt an Silica 10 bis 60 Gew.-% beträgt.

3. Verfahren nach Anspruch 1 oder 2, **dadurch gekennzeichnet, dass** als Polyol ein Polyetherpolyol eingesetzt wird.

4. Verfahren nach einem der Ansprüche 1 bis 3, **dadurch gekennzeichnet, dass** als Polyol ein Polyetherpolyol auf Basis von Ethylenoxid und Propylenoxid mit einem Molgewicht von 96 bis 20 000 g/mol oder Polytetrahydrofuran mit einem Molgewicht von 550 bis 4000 g/mol eingesetzt wird.

5. Verfahren nach einem der Ansprüche 1 bis 4, **dadurch gekennzeichnet, dass** die Verbindung (S) eine mindestens einfach alkoxylierte Silylgruppe
(R¹-O-)ₙ-Si-
aufweist, in denen
R¹ für C₁- bis C₂₀-Alkyl, und
n für eine ganze Zahl von 1 bis 3 steht.

6. Verfahren nach Anspruch 5, **dadurch gekennzeichnet, dass** R¹ C₁- bis C₄-Alkyl und n 2 oder 3 ist.

7. Verfahren nach einem der Ansprüche 1 bis 6, **dadurch gekennzeichnet, dass** die Verbindung (S) einen nicht reaktiven Alkyl-, Cycloalkyl- oder Aryl-Substituenten, der Heteroatome enthalten kann, aufweist.

8. Verfahren nach einem der Ansprüche 1 bis 6, **dadurch gekennzeichnet, dass** die Verbindung (S) einen Alkyl-, Cycloalkyl- oder Arylsubstituenten aufweist, der eine primäre Aminogruppe, eine Hydroxylgruppe, eine Thiolgruppe oder eine Epoxygruppe als reaktive Gruppe aufweist.

## Claims

1. A process for producing silicate-comprising polyols, which comprises the steps
(i) admixing of an aqueous silica sol (K) having an average particle diameter, based on the BET method, of from 1 to 150 nm and a silica content, calculated as SiO₂, of from 1 to 60% by weight and having a pH of from 1 to 6 with a 0.5- to 5-fold amount (based on the amount of water) of at least one organic solvent (L) selected from the group consisting of methanol, ethanol, 1-propanol, 2-propanol, 1-butanol, 2-butanol, 2-methyl-2-propanol, 1-chloro-2-propanol, cyclopentanol, cyclohexanol, 1,4-dioxane, tetrahydrofuran, 1-methoxy-2-propanol, 1-ethoxy-2-propanol, 2-ethoxyethanol, 2-methyl-2-propanol, 2-methoxyethanol, dimethylformamide, acetonitrile, dimethyl sulfoxide, acetone, methyl ethyl ketone and ethyl acetate,
and
(ii) admixing of the resulting mixture with a polyol,
(iii) at least partial removal of the water and organic solvent (L) by distillation,
(iv) admixing with at least one compound (S) which has at least one at least monoalkoxylated silyl group and at least one alkyl, cycloalkyl or aryl substituent which may comprise heteroatoms, where this substituent optionally has a group which is reactive toward an alcohol, an amine or an isocyanate, in an amount of from 0.1 to 30 mol%, based on the SiO₂ content,
(v) optionally adjustment of the pH of the silicate-comprising polyol to a value of from 7 to 12 by addition of a strongly basic compound selected from among alkali metal hydroxides and alkali metal alkoxides,
with step (v) also being able to be carried out between steps (iii) and (iv).

2. The process according to claim 1, wherein the pH of the aqueous silica sol (K) used in step (i) is from 2 to 6, its average particle diameter is from 5 to 150 nm and its silica content is from 10 to 60% by weight.

3. The process according to claim 1 or 2, wherein a polyether polyol is used as polyol.

4. The process according to any of claims 1 to 3, wherein a polyether polyol based on ethylene oxide and propylene oxide and having a molecular weight of from 96 to 20 000 g/mol or polytetrahydrofuran having a molecular weight of from 550 to 4000 g/mol is used as polyol.

5. The process according to any of claims 1 to 4, wherein the compound (S) has an at least monoalkoxylated silyl group
(R¹-O-)ₙ-Si-
where
R¹ is C₁-C₂₀-alkyl, and
n is an integer from 1 to 3.

6. The process according to claim 5, wherein R¹ is C₁-C₄-alkyl and n is 2 or 3.

7. The process according to any of claims 1 to 6, wherein the compound (S) has an unreactive alkyl, cycloalkyl or aryl substituent which may comprise heteroatoms.

8. The process according to any of claims 1 to 6, wherein the compound (S) has an alkyl, cycloalkyl or aryl substituent which has a primary amino group, a hydroxyl group, a thiol group or an epoxy group as reactive group.

## Revendications

1. Procédé pour la préparation de polyols contenant des silicates, comprenant les étapes
(i) addition à un sol de silice aqueux (K) ayant un diamètre moyen de particule, basé sur la méthode BET, de 1 à 150 nm, ayant un teneur en acide silicique, calculée en SiO₂, de 1 à 60 % en poids, à un pH de 1 à 6, d'une quantité de 0,5 à 5 fois, par rapport à l'eau, d'au moins un solvant organique (L), choisi dans le groupe constitué par le méthanol, l'éthanol, le 1-propanol, le 2-propanol, le 1-butanol, le 2-butanol, le 2-méthyl-2-propanol, le 1-chloro-2-propanol, le cyclopentanol, le cyclohexanol, le 1,4-dioxane, le tétrahydrofurane, le 1-méthoxy-2-propanol, le 1-éthoxy-2-propanol, le 2-éthoxyéthanol, le 2-méthyl-2-propanol, le 2-méthoxyéthanol, le diméthylformamide, l'acétonitrile, le diméthylsulfoxyde, l'acétone, la méthyléthylcétone et l'acétate d'éthyle.
ainsi que
(ii) addition d'un polyol au mélange ainsi obtenu,
(iii) élimination au moins partielle par distillation du solvant organique (L) et d'eau,
(iv) addition d'au moins un composé (S), qui comporte au moins un groupe silyle au moins une fois alcoxylé et au moins un substituant alkyle, cycloalkyle ou aryle, qui peut contenir des hétéroatomes, ce substituant comportant éventuellement un groupe qui est réactif vis-à-vis d'un alcool, d'une amine ou d'un isocyanate, en une quantité de 0,1 à 30 % en moles, par rapport à la teneur en SiO₂,
(v) n option ajustement du pH du polyol contenant un silicate, à une valeur de 7 à 12 par addition d'un composé fortement basique, choisi parmi des hydroxydes de métaux alcalins et des alcoolates de métaux alcalins,
l'étape (v) pouvant également être effectuée entre les étapes (iii) et (iv).

2. Procédé selon la revendication 1, **caractérisé en ce que** le pH du sol de silice aqueux (K) utilisé dans l'étape (i) vaut de 2 à 6, son diamètre moyen de particule vaut de 5 à 150 nm et sa teneur en silice vaut de 10 à 60 % en poids.

3. Procédé selon la revendication 1 ou 2, **caractérisé en ce qu'**on utilise comme polyol un polyétherpolyol.

4. Procédé selon l'une quelconque des revendications 1 à 3, **caractérisé en ce qu'**on utilise comme polyol un polyétherpolyol à base d'oxyde d'éthylène et d'oxyde de propylène, ayant une masse moléculaire de 96 à 20 000 g/mole, ou un polytétrahydrofurane ayant une masse moléculaire de 550 à 4 000 g/mole.

5. Procédé selon l'une quelconque des revendications 1 à 4, **caractérisé en ce que** le composé (S) comporte un groupe silyle au moins une fois alcoxylé
(R¹-O-)ₙ-Si-
dans laquelle
R¹ représente un groupe alkyle en C₁-C₂₀, et
n représente un nombre entier valant de 1 à 3.

6. Procédé selon la revendication 5, **caractérisé en ce que** R¹ est un groupe alkyle en C₁-C₄ et n est 2 ou 3.

7. Procédé selon l'une quelconque des revendications 1 à 6, **caractérisé en ce que** le composé (S) comporte un substituant alkyle, cycloalkyle ou aryle non réactif, qui peut contenir des hétéroatomes.

8. Procédé selon l'une quelconque des revendications 1 à 6, **caractérisé en ce que** le composé (S) comporte un substituant alkyle, cycloalkyle ou aryle, qui comporte comme groupe réactif un groupe amino primaire, un groupe hydroxy, un groupe thiol ou un groupe époxy.
